# EUROPEAN PATENT SPECIFICATION

(11) **EP 2 703 068 B1**
(45) Date of publication and mention of the grant of the patent: **13.09.2017**
(21) Application number: 12776173.2
(22) Date of filing: 26.04.2012
(51) Int. Cl.: B01D 69/08

(54) **DEVICE FOR CLEANING POROUS HOLLOW FIBER MEMBRANE**
VORRICHTUNG ZUR REINIGUNG PORÖSER HOHLFASERMEMBRANEN
DISPOSITIF POUR LE NETTOYAGE DE MEMBRANE POREUSE EN FORME DE FIBRE CREUSE

(30) Priority: 26.04.2011 JP 2011098204; 26.04.2011 JP 2011098205
(43) Date of publication of application: 05.03.2014
(73) Proprietor: Mitsubishi Chemical Corporation, Tokyo 100-8251 (JP)
(72) Inventor: KURASHINA Masaki, Otake-shi Hiroshima 739-0693 (JP); SUMI Toshinori, Otake-shi Hiroshima 739-0693 (JP); FUJIKI Hiroyuki, Otake-shi Hiroshima 739-0693 (JP); HIROMOTO Yasuo, Otake-shi Hiroshima 739-0693 (JP)
(74) Representative: Hoffmann Eitle
(86) International application number: PCT/JP2012/061209
(87) International publication number: WO 2012/147852

(56) References cited:
- EP-A1- 2 674 210
- JP-A- 8 117 573
- JP-A- 9 057 078
- JP-A- 11 076 768
- JP-A- 2007 218 859
- JP-A- 2008 161 755
- JP-A- 2008 207 050
- US-A- 5 922 141
- US-B1- 6 485 193

## Description

### TECHNICAL FIELD

The present invention relates to a device for cleaning porous hollow fiber membranes.

The present application claims priority based on Japanese Patent Application No. 2011-098204 which was filed in Japan on 26 April 2011 and Japanese Patent Application No. 2011-098205 which was filed in Japan on 26 April 2011, to which the skilled reader may refer for details.

### BACKGROUND ART

Porous hollow fiber membranes having a hollow porous layer composed of cellulose acetate, polyacrylonitrile, polysulfone, fluorine-based resin or the like and produced from wet- or dry-spinning are widely used in microfiltration membranes, ultrafilters, reverse osmosis membrane filters or the like in fields such as the food industry, medical care or the electronics industry, for the concentration and recovery of useful components, the removal of unwanted components, desalination, or the like.

In the case of manufacturing porous hollow fiber membranes by way of wet- or dry-type spinning, first, a membrane molding solution in which hydrophobic polymer and hydrophilic polymer are dissolved in a solvent is prepared. Herein, the hydrophilic polymer is added in order to adjust the viscosity of the membrane molding solution to a range suited to the formation of porous hollow fiber membranes and achieve stabilization of the membrane production state, and polyethylene glycol, polyvinyl pyrrolidone, etc. have been commonly used. In addition, as the solvent, one that can dissolve the hydrophobic polymer and the hydrophilic polymer and is soluble in water is used and, for example, N,N-dimethylacetoamide (DMAc), N,N-dimethylformamide (DMF) or the like can be exemplified.

A porous hollow fiber membrane is obtained by a solidification process of discharging this membrane molding solution in an annular form, and causing to solidify in a congealed liquid. The membrane molding solution may be introduced into the congealed liquid by passing through a free traveling portion contacting with air (dry-wet-spinning method), or may be introduced directly to the congealed liquid without passing through the free traveling portion (wet-spinning method).

However, inside the porous hollow fiber membrane at the moment when solidification finishes, normally solvent or hydrophilic polymer remains in the porous part thereof in abundance in the state of a solution. When solvent is remaining in this way, the mechanical strength is low since the porous part is a swelled state, and when hydrophilic polymer is remaining, the permeability, which is one of the important abilities demanded in porous hollow fiber membranes, will be insufficient.

For this reason, after the solidification process, a process is necessary to remove the solvent and hydrophilic polymer remaining in this way from the porous hollow fiber membrane.

Therefore, a method of removing the remaining hydrophilic polymer from the porous hollow fiber membrane has been proposed (e.g., refer to Patent Document 1).

Patent Document 1 discloses a cleaning method for porous hollow fiber membranes that can remove hydrophilic polymer remaining in a porous hollow fiber membrane at low cost or in a short time. More specifically, it includes a reduced-pressure step of reducing the pressure of cleaning liquid on an outer circumferential side of the porous hollow fiber membrane in a reduced-pressure cleaning part, and ejecting a hydrophilic polymer aqueous solution in the membrane to the outer circumferential side of the porous hollow fiber membrane; a cleaning liquid supply step of pressurizing the cleaning liquid on the outer circumferential side of the porous hollow fiber membrane in a pressurized cleaning part provided at a later stage than the reduced-pressure cleaning part to inject the cleaning liquid from the membrane surface, and pushing into a membrane hollow part while substituting and diluting the hydrophilic polymer aqueous solution in the membrane; and a reduced-pressure step of reducing the pressure again on the outer circumferential side of the porous hollow fiber membrane at a reduced-pressure cleaning part further provided at a later stage than the pressurized cleaning part to cause the hydrophilic polymer aqueous solution to eject to the outer circumferential side of the porous hollow fiber membrane.

However, Patent Document 1 describes a method using a pressure-tight tube member as an example in the reduced-pressure step and cleaning liquid supply step. More specifically, at both ends of the tube member, sealing mechanisms are provided that are composed of a labyrinth seal or the like, which can keep the inside of the tube member in a reduced-pressure state or pressurized state relative to outside, while having a clearance enough that the hollow fiber membrane can travel therethrough. Then, by allowing a pressure reduction means or pressurizing means to operate along with continuously introducing the hollow fiber membrane from one end thereof into the tube member, the outer circumferential side of the hollow fiber membrane is reduced in pressure or pressurized inside of the tube member, and the hydrophilic polymer remaining inside of the hollow fiber membrane is suctioned to the outer circumferential side of the hollow fiber membrane and removed.

EP 2 674 210 A1 relates to a washing device for a porous hollow fiber membrane, including: n (n is an integer of 2 or greater) washing tanks that contain a washing liquid, through which the porous hollow fiber membrane sequentially passes; and at least one pressure applying unit that pressurizes or de-pressurizes the washing liquid on the outer side of the porous hollow fiber membrane immersed in the washing liquid to force the washing liquid to pass through a membrane part of the porous hollow fiber membrane, in which the pressure applying unit is accommodated in at least one of the first to (n-1)-th washing tanks.

US 5 922 141 A describes a method of cleaning fiber of dust and particulate matter thereon, including the steps of directing the fiber passage having an entrance end and an exit end; protecting the fiber from abrasion at the entrance end and the exit end; passing the fiber through a vacuum chamber in the fiber passage; directing a fluid spray against the fiber in a direction opposite to the direction of movement of the fiber along the passage at a velocity sufficient to dislodge particulate matter from the fiber; and exhausting the fluid and the particulate matter from the vacuum chamber.

US 6 485 193 B1 relates to an apparatus for cleaning an optical fiber ribbon without splitting the ribbon. The apparatus comprises a first element that has a channel formed therein, which preferably has a width that is substantially equal to the width of an optical fiber ribbon. A ribbon is cleaned by disposing it in the channel and by pulling it through the channel while applying a force to the top surface of the ribbon. The force may be applied, for example, by a user who applies a cleaning cloth to the top surface of the ribbon as it is pulled through the channel.

### DOCUMENTS OF RELATED ART

### PATENT DOCUMENTS

[Patent Document 1] Japanese Unexamined Patent Application, Publication No. 2008-161755

### DISCLOSURE OF THE INVENTION

### Problems to be Solved by the Invention

However, there are the following such problems in the device for cleaning porous hollow fiber membranes of Patent Document 1.

With the device for cleaning porous hollow fiber membranes of Patent Document 1, it is necessary to insert the porous hollow fiber membrane inside of the tube membrane upon arranging the porous hollow fiber membrane at a predetermine position in the device for cleaning. Herein, since the porous hollow fiber membrane is a soft stringy member, workability upon inserting the porous hollow fiber membrane inside the tube member is troublesome.

Therefore, there has been concern over the operation efficiency deteriorating upon arranging the porous hollow fiber membrane at a predetermined position in the device for cleaning.

In addition, in the case of the porous hollow fiber membrane having clogged or the like inside of the tube member for any reason, it is necessary to confirm and maintain the inside of the tube member by removing the tube member after stopping the device for cleaning. However, the inside of the tube member has poor visibility, and thus there is a problem in that maintenance is also difficult. In particular, in the case of the tube member being formed to be long, this tendency is remarkable.

Furthermore, since it is necessary to insert the porous hollow fiber membrane inside of the tube member again after maintenance of the tube member, the operation efficiency further deteriorates, and there is concern over the productivity also declining.

Furthermore, upon producing a cylindrical knitted strand of a porous hollow fiber membrane by circular knitting fibers, a portion larger than a prescribed outside diameter may be formed, which becomes an abnormal part such as a bump when forming the porous hollow fiber membrane. There is concern over an abnormal part getting stuck inside of the tube member upon a porous hollow fiber membrane having an abnormal part traveling inside of the tube member. There is concern over clogging of a porous hollow fiber membrane thereby occurring inside of the tube member, and the efficiency of the cleaning process deteriorating.

Therefore, the present invention has an object of providing a device for cleaning porous hollow fiber membranes that is highly efficient, is able to be easily maintained, and can arrange the porous hollow fiber membrane at a predetermined position easily and efficiently.

In addition, the present invention has an object of providing a device for cleaning porous hollow fiber membranes that can easily and efficiently arrange a porous hollow membrane at a predetermined position, and can efficiently clean porous hollow fiber membranes by preventing clogging of the porous hollow fiber membranes.

### Means for Solving the Problems

In order to solve the above-mentioned problems, a device for cleaning porous hollow fiber membranes of the present invention, as defined in claim 1, is provided.

The device for cleaning a porous hollow fiber membrane, that allows the porous hollow fiber membrane to travel in a cleaning tank accommodating a cleaning liquid and removes residue inside of the porous hollow fiber membrane, comprises: a duct structure having at least two hollow fiber membrane running paths in a direction intersecting the travel direction, in which the porous hollow fiber membrane can travel continuously from an inlet at one end side towards an outlet at another end side inside of a cleaning tank, the at least two hollow fiber membrane running paths being formed in parallel, wherein the duct structure comprises at least two structures that are separable. The duct structure has at least two running grooves formed in at least one structure among the at least two structures and arranged in parallel, and a branched duct that pressure feeds or suctions the cleaning liquid to circulate the cleaning liquid. The hollow fiber membrane running paths are configured by the running grooves and the other structure of the at least two structures. The branched duct is a duct communicating with the hollow fiber membrane running path.

According to the present invention, the hollow fiber membrane running path is configured by the running groove formed in the main body, and the lid that is detachable relative to the main body; therefore, the top surface of the running groove can be completely opened by removing the lid, whereby the porous hollow fiber membrane can be simply and efficiently arranged at a predetermined position inside of the hollow fiber membrane travel flow path. In addition, during cleaning of porous hollow fiber membranes, even if the porous hollow fiber membrane clogs inside of the hollow fiber membrane running path for any reason and the device for cleaning stops, the inside of the porous hollow fiber running path can be simply confirmed and easily maintained by removal the lid from the main body. Therefore, the operating efficiency of the device for cleaning can be improved.

In addition, it is preferable for the hollow fiber membrane running path to have a cross-sectional shape orthogonal to the travel direction that is formed in a triangular shape or substantially rectangular shape, and for one side among at least two sides forming the triangular shape or the rectangular shape to be formed by the lid.

According to the present invention, by forming the cross-sectional shape of the hollow fiber membrane running path formed by the running grooves and the lid in a triangular shape or substantially rectangular shape, the flow state of cleaning liquid flowing around the porous hollow fiber membrane inside of the hollow fiber membrane running path enters an axi-symmetrical state relative to the central axis of the porous hollow fiber membrane. Since the contact environment of the cleaning liquid relative to the porous hollow fiber membrane is thereby not biased in the circumferential direction of the porous hollow fiber membrane, it is possible to stabilize the travel state of the porous hollow fiber membrane inside of the hollow fiber membrane running path. Furthermore, by forming one side among the at least two sides forming the triangular shape or rectangular shape by way of the lid, it is possible to easily arrange the porous hollow fiber membrane at a predetermined position in the running grooves by removing the lid. Since the porous hollow fiber membrane can be simply and effectively arranged at a predetermined position inside of the hollow fiber membrane running path in this way, the efficiency of the device for cleaning can be improved.

In addition, the duct structure includes at least two hollow fiber membrane running paths in a direction intersecting the travel direction. An expanded hollow part may be respectively formed individually between each of the inlets and each of the outlets.

According to the present invention, since at least two hollow fiber membrane running paths are formed, and each of the expanded hollow parts is formed separately between the inlet and outlet of the respective hollow fiber membrane running paths, at least two porous hollow fiber membranes can be successfully cleaned at once. Therefore, the efficiency of the device for cleaning can be further raised.

In order to solve the above-mentioned problems, a device for cleaning porous hollow fiber membranes of the present invention, which allows the porous hollow fiber membrane to travel in a cleaning tank accommodating a cleaning liquid and removes water-soluble residue inside of the porous hollow fiber membrane, is characterized in that a duct structure is provided having a hollow fiber membrane running path in which the porous hollow fiber membrane can travel continuously from an inlet at one end side towards an outlet at another end side inside of a cleaning tank, in which the duct structure is composed of a main body and a lid that is arranged above the main body and is removable from the main body, and has a running groove formed in a top surface of the main body along a travel direction of the porous hollow fiber membrane, and a branched duct that pressure feeds or suctions the cleaning liquid to cause the cleaning liquid to circulate, in which the hollow fiber membrane running path is formed by the running groove formed in the main body of the duct structure and the lid tightly sealing to the top surface of the main body and covering the running groove.

According to the present invention, the hollow fiber membrane running path is configured by the running groove formed in the main body, and the lid that is detachable relative to the main body, and the top surface of the running groove can be completely opened by removing the lid; therefore, the porous hollow fiber membrane can be simply and efficiently arranged at a predetermined position inside of the hollow fiber membrane running path. Therefore, the operating efficiency of the device for cleaning can be improved.

In addition, according to the present invention, since the hollow fiber membrane running path can be opened by removing the lid, when a defectively formed porous hollow fiber membrane is trying to travel inside of the hollow fiber membrane running path, for example, the porous hollow fiber membrane can be made to remove from the running groove along with making the lid remove from the main body. Since it is thereby possible to avoid a defectively formed porous hollow fiber membrane from traveling inside the hollow fiber membrane running path, clogging of the porous hollow fiber membrane can be prevented.

In addition, it is preferable to include a hollow fiber membrane transfer means for arranging the porous hollow fiber membrane inside of the running groove coupled with mounting of the lid, and removing the porous hollow fiber membrane from the running groove coupled with removal of the lid.

According to the present invention, when the defectively formed porous hollow fiber membrane tries to travel inside of the hollow fiber membrane running path during cleaning of the porous hollow fiber membrane, the porous hollow fiber membrane can be removed from inside of the running grooves simultaneously with causing the lid to remove from the main body. It is thereby possible to avoid the defectively formed porous hollow fiber membrane from traveling inside of the hollow fiber membrane running path. In addition, after avoiding the defectively formed porous hollow fiber membrane from traveling inside of the hollow fiber membrane running path, the porous hollow fiber membrane can be arranged inside of the running grooves simultaneously with mounting the lid to the main body. It is thereby possible to simply and efficiently arrange the porous hollow fiber membrane at a predetermined position inside of the hollow fiber membrane running path.

In addition, it is preferable to include an outside diameter detection means for detecting an outside diameter of the porous hollow fiber membrane prior to the porous hollow fiber membrane being introduced inside of the hollow fiber membrane running path; a cleaning liquid adjustment means for controlling start or stop of pressure feed or suction of the cleaning liquid inside of the duct structure; and a lid transfer means for causing the lid to move so as to mount or detach the lid relative to the main body.

According to the present invention, due to having the outside diameter detection means, it is possible to reliably detect a defectively formed porous hollow fiber membrane. In addition, due to having the lid transfer means, when the defectively formed porous hollow fiber membrane tries to travel inside of the hollow fiber membrane running path, it is possible to avoid the defectively formed porous hollow fiber membrane from traveling inside of the hollow fiber membrane running path by causing the porous hollow fiber membrane to be removed from inside the running groove simultaneously with causing the lid to remove from the main body. In addition, due to having the cleaning liquid adjustment means, it is possible to prevent a pressing force or suction force from acting on the lid and porous hollow fiber membrane by causing the pressure feeding or suction of the cleaning liquid to stop during removal of the lid. The lid and porous hollow fiber membrane can thereby be made to move easily. In addition, it is possible to suppress the pressing force or suction force from acting on the porous hollow fiber membrane and the porous hollow fiber membrane being damaged.

In addition, it is preferable to perform abnormal part avoidance control to avoid an abnormal part from traveling through the hollow fiber membrane running path, in a case of determining that the outside diameter of the porous hollow fiber membrane detected by way of the outside diameter detection means is a larger diameter than a predetermined value, and the abnormal part avoidance control to include: a cleaning liquid flow interruption operation to cause the pressure feed or suction of the cleaning liquid to stop by way of the cleaning liquid adjustment means, and a removal operation to cause the lid to remove from the main body by way of the lid transfer means, together with removing the porous hollow fiber membrane from the running groove by way of the hollow fiber membrane transfer means, after the cleaning liquid flow interruption operation.

According to the present invention, since it is possible to avoid an abnormal part of a porous hollow fiber membrane formed in a large diameter by performing the abnormal part avoidance control, clogging of the porous hollow fiber membrane inside of the hollow fiber membrane running path can be reliably prevented.

In addition, in the abnormal part avoidance control, since performing the removal operation causing the lid and porous hollow fiber membrane to be removed is performed after the cleaning liquid flow interruption operation causing the pressure feeding or suction of the cleaning liquid to stop, it is possible to suppress the pressing force or suction force from acting on the lid and porous hollow fiber membrane. It is thereby possible to allow the lid and porous hollow fiber membrane to easily move. In addition, it is possible to suppress the pressing force or suction force from acting on the porous hollow fiber membrane and the porous hollow fiber membrane being damaged.

In other words, the present invention relates to the following.
(1) A device for cleaning a porous hollow fiber membrane that allows the porous hollow fiber membrane to travel in a cleaning tank accommodating a cleaning liquid and removes residue inside of the porous hollow fiber membrane, the device comprising:
   a duct structure having at least two hollow fiber membrane running paths in a direction intersecting the travel direction, in which the porous hollow fiber membrane can travel continuously from an inlet at one end side towards an outlet at another end side inside of a cleaning tank, the at least two hollow fiber membrane running paths being formed in parallel, wherein
   the duct structure comprises at least two structures that are separable,
   the duct structure has at least two running grooves formed in at least one structure among the at least two structures and arranged in parallel, and a branched duct that pressure feeds or suctions the cleaning liquid to circulate the cleaning liquid,
   wherein the hollow fiber membrane running paths are configured by the running grooves and the other structure of the at least two structures, and
   the branched duct is a duct communicating with the hollow fiber membrane running path.
(2) The device for cleaning according to (1), wherein the hollow fiber membrane running path includes an expanded hollow part in which a cross-sectional area of a cross section orthogonal to a hollow fiber membrane travel direction is formed to be greater than a cross-sectional area of a cross section orthogonal to the hollow fiber membrane travel direction of the running groove; the expanded hollow part is formed between the inlet at one end side of the hollow fiber membrane running path and the outlet at the other end side of the hollow fiber membrane running path; and the branched duct is a duct communicating with the expanded hollow part.
(3) The device for cleaning according to (1) or (2), wherein either one structure among the at least two structures has at least one flat surface, and one surface constituting the hollow fiber membrane running path shares the flat surface.
(4) The device for cleaning according to (3), wherein a cross-sectional shape of the hollow fiber membrane running path orthogonal to the travel direction is a triangular shape or rectangular shape.
(5) The device for cleaning according to (4), wherein the running path is a path respectively formed independently so as to correspond to a hollow fiber membrane that is traveling, and the expanded hollow part is respectively formed independently relative to the running paths respectively formed independently.
(6) The device for cleaning according to any one of (2) to (5), wherein the expanded hollow part has a length X parallel to the hollow fiber membrane travel direction satisfying 2d ≤ X ≤ 200d, and has a height W orthogonal to the hollow fiber membrane travel direction satisfying 1.5d ≤ W ≤ 30d, in which d is the outside diameter of the hollow fiber membrane.
(7) The device for cleaning according to any one of (2) to (6), wherein an angle formed between a bottom surface of the expanded hollow part and a lateral surface connecting the bottom surface of the expanded hollow part and a bottom surface of the running groove is in the range of 90 degrees to 175 degrees.
(8) The device for cleaning according to any one of (1) to (7) includes a hollow fiber membrane transfer means for causing the porous hollow fiber membrane insert or remove from inside of the running groove coupled with mounting or detaching of the at least two structures.
(9) The device for cleaning a porous hollow fiber membrane according to any one of (1) to (8) includes: an outside diameter detection means for detecting an abnormal part on the outside diameter of the porous hollow fiber membrane prior to the porous hollow fiber membrane being introduced inside of the hollow fiber membrane running path; and a structure transfer means for causing at least one structure among the at least two structures to move so as to separate the at least two structures.
(10) The device for cleaning according to any one of (1) to (9) includes: an abnormal part avoidance control device that performs abnormal part avoidance control to avoid an abnormal part from traveling through the hollow fiber membrane running path, in a case of determining that the outside diameter of the porous hollow fiber membrane detected by way of the outside diameter detection means is a larger diameter than a predetermined value, in which the abnormal part avoidance control includes: a cleaning liquid flow adjustment operation of reducing or stopping pressure feed or suction of the cleaning liquid by way of the cleaning liquid adjustment means; and a removal operation of separating the at least two structures by way of the structure transfer means of at least one structure among the at least two structures, together with removing the porous hollow fiber membrane from inside of the running groove by way of the hollow fiber membrane transport means, after the cleaning liquid flow adjustment operation.
(11) The device for cleaning according to any one of (1) to (10), wherein one among the at least two structures is a main body, and one is a lid, and the lid is a structure that is disposed above the main body and is removable from the main body.
(12) The device for cleaning according to (11), wherein the hollow fiber membrane running path is configured by the running groove, which is formed in the main body, and said lid, the top surface of the running groove being completely openable by removing the lid.

### Effects of the Invention

According to the present invention, the hollow fiber membrane running path is configured by the running groove formed in the main body, and the lid that is detachable relative to the main body; therefore, the top surface of the running groove can be completely opened by removing the lid, whereby the porous hollow fiber membrane can be simply and efficiently arrange at a predetermined position inside of the hollow fiber membrane travel flow path. In addition, during cleaning of porous hollow fiber membranes, even if the porous hollow fiber membrane clogs inside of the hollow fiber membrane running path for whatever reason and the device for cleaning stops, the inside of the porous hollow fiber running path can be simply confirmed and easily maintained by removal the lid from the main body. Therefore, the operating efficiency of the device for cleaning can be improved.

In addition, according to the present invention, since the hollow fiber membrane running path can be opened by removing the lid, when a defectively formed porous hollow fiber membrane is trying to travel inside of the hollow fiber membrane running path, for example, the porous hollow fiber membrane can be made to remove from the running groove along with making the lid remove from the main body. Since it is thereby possible to avoid a defectively formed porous hollow fiber membrane from travelling inside the hollow fiber membrane running path, clogging of the porous hollow fiber membrane can be prevented.

### BRIEF DESCRIPTION OF THE DRAWINGS

FIG. 1 is a view illustrating a device for cleaning a porous hollow fiber membrane;
FIG. 2 is a perspective view of a duct structure;
FIG. 3 is a perspective view of a main body when removing a lid of the duct structure;
FIG. 4 is a cross-sectional view along the line A-A in FIG. 2 of the duct structure;
FIG. 5 is a cross-sectional view along the line B-B in FIG. 2 of the duct structure;
FIG. 6 is a perspective view of the main body of a duct structure of a second embodiment;
FIG. 7 is a cross-sectional view orthogonal to a travel direction viewed from an upstream side of the duct structure of the second embodiment;
FIG. 8 is an illustrative diagram of a device for cleaning a porous hollow fiber membrane of a third embodiment;
FIG. 9 is a lateral cross-sectional view of the duct structure of the third embodiment;
FIG. 10 is a perspective view of the main body when the lid of the duct structure of the third embodiment has been removed;
FIG. 11 is a cross-sectional view perpendicular to the travel direction of the duct structure view from an upstream side of the third embodiment;
FIG. 12 is an illustrative diagram of a lid moving means of the third embodiment;
FIG. 13 is an illustrative diagram of a hollow fiber membrane moving means of the third embodiment;
FIG. 14 is a system block diagram of an abnormal part avoidance control device of the third embodiment;
FIG. 15 is the control flow of abnormal part avoidance control of the third embodiment; and
FIG. 16 is an illustrative diagram of a separating action of the third embodiment.

### PREFERRED MODE FOR CARRYING OUT THE INVENTION

The device for cleaning porous hollow fiber membranes that is the first aspect of the present invention includes: at least one cleaning tank in which cleaning liquid is accommodated, and the porous hollow fiber membrane sequentially passes; a pressurized cleaning part that pressurizes cleaning liquid on the outer circumferential side of the porous hollow fiber membrane immersed in the cleaning liquid to cause the cleaning liquid to pass from the inner circumferential side of the porous hollow fiber membrane to the outer circumferential side and/or a reduced-pressure cleaning part that reduces the pressure of the cleaning liquid on the outer circumferential side of the porous hollow fiber membrane immersed in the cleaning liquid to cause the cleaning liquid to pass from the inner circumferential side of the porous hollow fiber membrane to the outer circumferential side; a supply means for supplying the cleaning liquid to the cleaning tank; and a duct structure having a hollow fiber membrane running path in which the porous hollow fiber membrane can continuously travel from an inlet at one end side towards an outlet at another end side provided inside the cleaning tank, in which the pressurized cleaning part has the duct structure arranged in the cleaning liquid and has an inside filled with cleaning liquid, and a liquid injection means for injecting cleaning liquid into the hollow fiber membrane running path of the duct structure to cause the pressure of the cleaning liquid inside of the hollow fiber membrane running path to rise, in which the reduced-pressure cleaning part has the duct structure arranged inside the cleaning liquid and has inside filled with cleaning liquid, and a liquid suction means for suctioning cleaning liquid inside of the hollow fiber membrane of the duct structure to cause the pressure of the cleaning liquid inside of the hollow fiber membrane running path to decline, in which the duct structure is composed of at least two structures that are separable, the duct structure having a running groove formed in at least one structure among the at least two structures, and a branched duct that pressure feeds or suctions the cleaning liquid to cause the cleaning liquid to circulate, and the branched duct is a duct communicating with the running groove.

### (Device for Cleaning Porous Hollow Fiber Membrane according to First Embodiment)

Hereinafter, a device for cleaning a porous hollow fiber membrane according to the first embodiment will be explained while referencing the drawings.

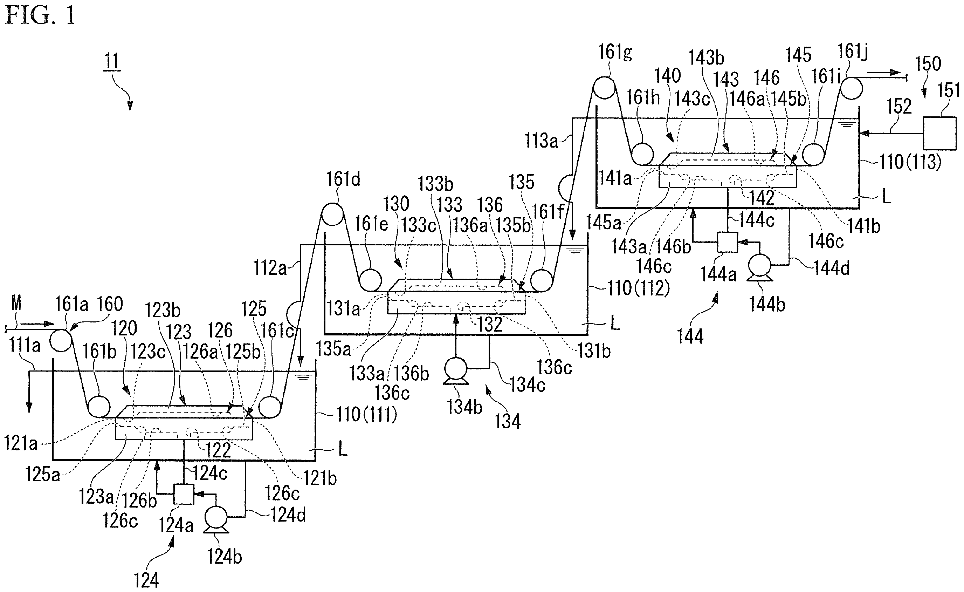

FIG. 1 is an illustrative diagram of a device 11 for cleaning a porous hollow fiber membrane M of the present embodiment.

The device 11 for cleaning the porous hollow fiber membrane M shown in FIG. 1 is configured to include three cleaning tanks 110 (first cleaning tank 111, second cleaning tank 112 and third cleaning tank 113) accommodating a cleaning liquid L through which the porous hollow fiber membrane M sequentially passes; a first reduced-pressure cleaning part 120, a pressurized cleaning part 130 and a second reduced-pressure cleaning part 140 that clean the porous hollow fiber membrane M; a supply means 150 for supplying clean cleaning liquid to the cleaning tank on the downstream side; and a regulating means 160 for regulating the travel of the porous hollow fiber membrane M.

In the following explanation, "upstream" and "downstream" are based on the travel direction of the porous hollow fiber membrane M, with the "upstream side" being a side on which the porous hollow fiber membrane M is supplied to the device 11 for cleaning, and the "downstream side" is defined as a side on which the porous hollow fiber membrane M is discharged from the device 11 for cleaning.

In the device 11 for cleaning the porous hollow fiber membrane M, the first reduced-pressure cleaning part 120, pressurized cleaning part 130 and second reduced-pressure cleaning part 140 are arranged in series, with the first reduced-pressure cleaning part 120 and second reduced-pressure cleaning part 140 being positioned at both ends of this arrangement.

In addition, the first reduced-pressure cleaning part 120 is stored in the first cleaning tank 111 arranged the most to the upstream side, the pressurized cleaning part 130 is stored in the second cleaning tank 112 on a downstream side of the first cleaning tank 111, and the second reduced-pressure cleaning part 140 is stored in the third cleaning tank 113 on a downstream side of the second cleaning tank 112.

### (Cleaning Tank)

The cleaning tanks 110 accommodate the cleaning liquid L.

The material of the cleaning tanks 110 is not particularly limited, and resins such as polyester, polyvinyl chloride, polyethylene, polyamide, polypropylene or polyacetal; metals such as iron, aluminum, copper, nickel or titanium; alloys with these metals as a main component (e.g., nickel alloy-titanium alloy, duralumin, stainless steel, etc.); composite materials of these; or the like can be exemplified, for example. In particular, the material of the first cleaning tank 111 is preferably titanium.

Regarding the shapes and sizes of the first cleaning tank 111, second cleaning tank 112 and third cleaning tank 113, it is sufficient if each can immerse the duct structures 123, 133 and 143 described later.

Overflow pipes 111a, 112a and 113a that discharge the overflow amount of the cleaning liquid L from the respective cleaning tanks 110 are provided to the respective cleaning tanks 110. More specifically, the cleaning liquid L having overflowed from the third cleaning tank 113 is supplied to the second cleaning tank 112 from the overflow pipe 113a of the third cleaning tank 113. In addition, the cleaning liquid L having overflowed from the second cleaning tank 112 is supplied to the first cleaning tank 111 from the overflow pipe 112a of the second cleaning tank 112. Furthermore, the cleaning liquid L having overflowed from the first cleaning tank 111 is discharged out of the system from the overflow pipe 111a of the first cleaning tank 111.

### (First Reduced-Pressure Cleaning Part)

The first reduced-pressure cleaning part 120 reduces the pressure of the cleaning liquid on an outer circumferential side of the porous hollow fiber membrane M immersed in the cleaning liquid L, thereby causing the cleaning liquid L to pass from the inner circumferential side of the porous hollow fiber membrane M to the outer circumferential side.

The first reduced-pressure cleaning part 120 shown in FIG. 1 has a duct structure 123 in which a hollow fiber membrane running path 125, an expanded hollow part 126, and a branched duct 122 branching from the expanded hollow part 126 are formed inside, and are arranged in the cleaning liquid L, the inside being filled with the cleaning liquid L; and a liquid suction means 124 that suctions the cleaning liquid L inside of the expanded hollow part 126 of the duct structure 123, causing the pressure of the cleaning liquid L inside of the expanded hollow part 126 to decline.

The cleaning liquid L is suctioned through the branched duct 122 by the liquid suction means 124, causing the pressure of the cleaning liquid L inside of the hollow fiber membrane running path 125 and/or inside of the expanded hollow part 126 to decline.

The liquid suction means 124 has an ejector 124a that suctions the cleaning liquid L, a pump 124b that pressure feeds the cleaning liquid L to the ejector 124a as a working fluid, a first tube 124c having one end connected with the branched duct 122 of the duct structure 123 and another end connected to the first cleaning tank 111, and a second tube 124d having one end connected to the first cleaning tank 111 and another end connected to the ejector 124a.

### (Duct Structure)

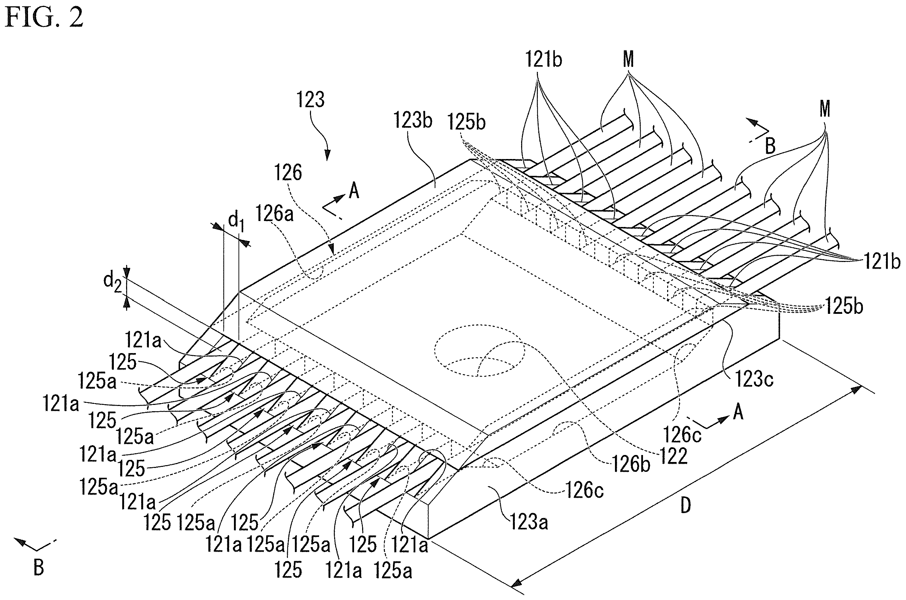

FIG. 2 is a perspective view of the duct structure 123.

The duct structure of the present invention is composed of at least two structures that can be separated. One of the structures is a main body, and one is a lid, the lid preferably being a structure that is arranged above the main body and can be attached or detached relative to the main body. In other words, as shown in FIG. 2, the duct structure 123 is preferably formed by the main body 123a and lid 123b.

As the material of the main body 123a and lid 123b constituting the duct structure 123, so long as being raw materials that do not corrode in the cleaning liquid L or leach into the cleaning liquid L, and able to maintain sufficient strength so as not deform or break under suction of the cleaning liquid L, it is not particularly limited, and resin such as polyester, polyvinyl chloride, polyethylene, polyamide, polypropylene or polyacetal; metals such as iron, aluminum, copper, nickel or titanium or alloys; composite materials of these; and the like can be exemplified. Thereamong, titanium is preferable.

### (Hollow Fiber Membrane Running Path)

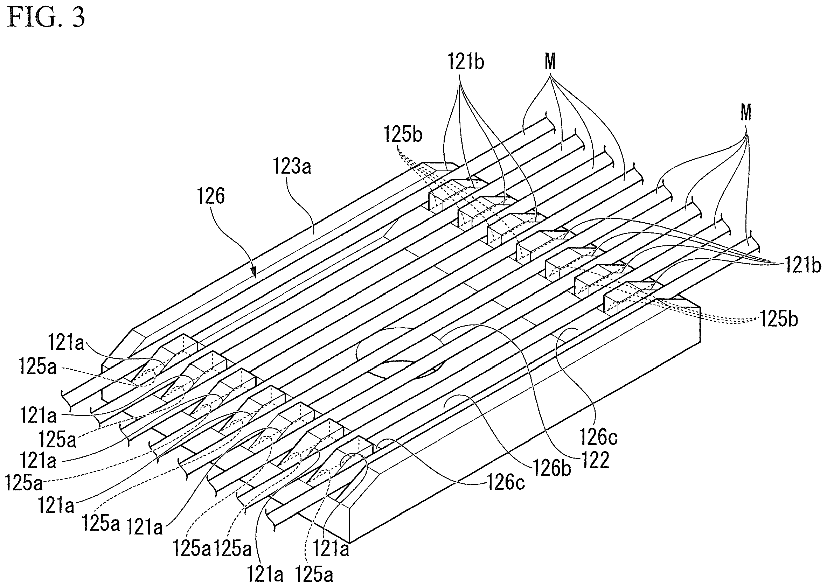

FIG. 3 is a perspective view of the main body 123a when the lid 123b of the duct structure 123 has been removed.

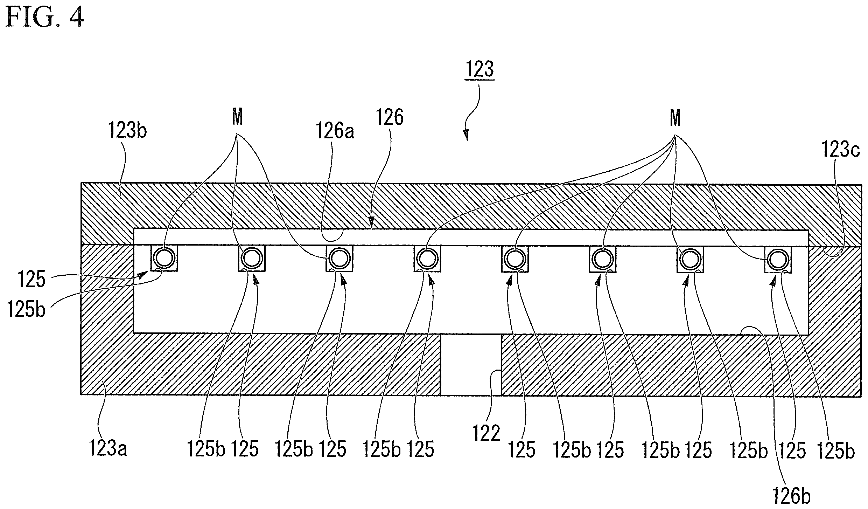

FIG. 4 is a cross-sectional view along the line A-A in FIG. 2 of the duct structure.

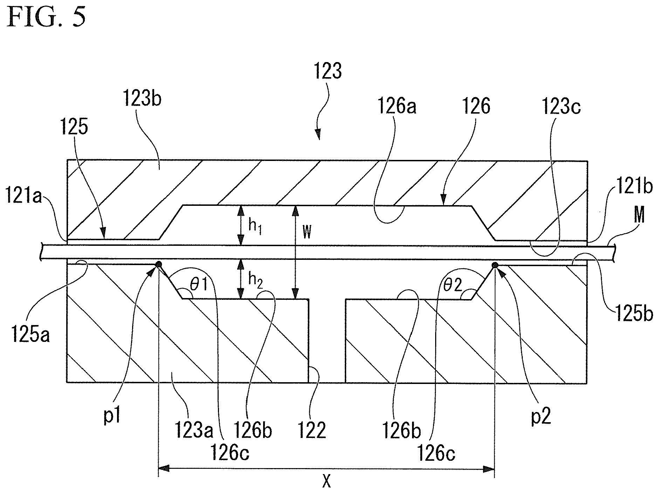

FIG. 5 is a cross-sectional view along the line B-B in FIG. 2 of the duct structure.

As shown in FIG. 3, running grooves 125 and 125b are formed in the top surface in the main body 123a along the travel direction of the porous hollow fiber membrane M. The hollow fiber membrane running path 125 is formed (refer to FIG. 1) by a bottom surface 123c of the lid 123b covering the running grooves 125a and 125b by sealing the top surface of the main body 123a. Eight of the hollow fiber membrane running paths 125 of the present embodiment (refer to FIG. 2) are formed in parallel in a direction orthogonal on the plane with the travel direction of the porous hollow fiber membrane M; however, the number of the hollow fiber membrane running paths 125 is not necessarily eight.

The duct structure preferably has at least two hollow fiber membrane running paths in a direction intersecting on the plane with the travel direction. In the at least two structures that are separable constituting the duct structure, at least two of the running grooves are formed.

As shown in FIG. 4, the cross-sectional shape of the hollow fiber membrane running path 125 orthogonal to the travel direction of the porous hollow fiber membrane M is acceptable so long as being substantially triangular shape or a substantially rectangular shape, with a rectangle being preferable from the aspect of easy formation of the path, and a square being particularly preferable. In addition, if the cross-sectional shape of the hollow fiber membrane running path 125 is a rectangle, it is advantageous also in the aspects of the contact area thereof being smaller even if the porous hollow fiber membrane M contacts the wall surface of the path, and breakage not easily occurring, compared to a case of the cross-sectional shape being circular.

In addition, compared to a case of forming a semicircular path in both of the main body 123a side and the mating face of the lid 123b, thereby forming a circular duct by closing together, when setting the cross-sectional shape of the hollow fiber membrane running path 125 to a rectangle and forming one side thereof by the bottom of the lid 123b, formation of the running grooves 125a and 125b may be only on the main body 123a side, whereby the mating face of the lid 123b can be made flat. When done in this way, processing upon forming the hollow fiber membrane running path 125 is easy, and precise positioning of the lid 123b with the main body 123a side becomes unnecessary. In addition, upon arranging the porous hollow fiber membrane M in the running grooves 125a and 125b, since the porous hollow fiber membrane M completely embeds in the path, there is no concern over pinching the porous hollow fiber membrane M at the mating face upon closing the lid 123b.

Also in a case of the cross-sectional shape of the hollow fiber membrane running path 125 being triangular, the same effect as a rectangle is obtained when forming one side thereof by the bottom of the lid 123b. In the case of the cross-sectional shape of the hollow fiber membrane running path 125 being triangular, an equilateral triangle is preferable.

If forming the cross-sectional shape of the hollow fiber membrane running path 125 in a regular polygon, the flow state of the cleaning liquid L flowing around the porous hollow fiber membrane M inside of the hollow fiber membrane running path 125 will be an axi-symmetrical state relative to the central axis of the porous hollow fiber membrane M, and the travel state of the porous hollow fiber membrane M inside of the hollow fiber membrane running path 125 tends to be stable.

However, the cross-sectional shape of the hollow fiber membrane running path 125 is not limited to a rectangle or triangle, and may be a polygon other than a triangle, a circle, or the like.

In addition, the hollow fiber membrane running path 125 may be configured by curved surfaces.

The minimum gap of the porous hollow fiber membrane M from the wall surface of the hollow fiber membrane running path 125 is preferably 5% to 40% of the diameter of the porous hollow fiber membrane M, and more preferably 10% to 20%.

If the minimum gap is at least the lower limit value, surface breakage due to the porous hollow fiber membrane M contacting with the wall surface of the hollow fiber membrane running path 125 and the travel resistance of the porous hollow fiber membrane M increasing will tend to be suppressed.

Therefore, the width d1 of the hollow fiber membrane running path 125 (refer to FIG. 2) comes to be preferably 110% to 180% of the diameter of the porous hollow fiber membrane M, and more preferably 120% to 140%. In addition, the height d2 of the hollow fiber membrane running path 125 (refer to FIG. 2) also comes to be preferably 110% to 180% of the diameter of the porous hollow fiber membrane M, and more preferably 120% to 140%.

On the other hand, if the minimum gap is no more than the upper limit value, it is possible to suppress causing the porous hollow fiber membrane M to oscillate and bending due to the flow of cleaning liquid L inside of the hollow fiber membrane running path 125, and the travel resistance of the porous hollow fiber membrane M from increasing. Additionally, it is also possible to suppress the suction amount of the cleaning liquid L by the liquid suction means 124, which is required in order to cause the pressure of the cleaning liquid L inside of the hollow fiber membrane running path 125 in which the porous hollow fiber membrane M travels to decline or rise to a predetermined pressure.

The inner wall surface of the hollow fiber membrane running path 125 is preferably smoothly finished by fine grinding finishing or polished finishing, so that the surface of the porous hollow fiber membrane M is not damaged even in a case of the porous hollow fiber membrane M coming into contact. Further, in addition to the finishing, it is more preferable to conduct fluorine coating, diamond-like carbon coating or the like on the inner wall surface of the hollow fiber membrane running path 125 to cause the frictional resistance with the porous hollow fiber membrane M to decrease.

### (Expanded Hollow Part)

As shown in FIG. 5, the expanded hollow part 126 is formed between an inlet (inlet 121a) on one end side of the hollow fiber membrane running path 125 and an outlet (outlet 121b) on the other end side.

The expanded hollow part 126 is formed by a main body-side concaved part 126b formed by indenting the top surface of the main body 123a; and a lid-side concaved part 126a formed by indenting the bottom surface 123c of the lid 123b at a position corresponding to the main body-side concaved part 126b.

The main body-side concaved part 126b is formed so as to communicate with all eight of the running grooves 125a and 125b arranged in parallel. In addition, the width of the main body-side concaved part 126b in the travel direction is formed so as to gradually widen from below to above. In other words, a lateral surface 126c connecting the bottom surface of the main body-side concaved part 126b (bottom surface of expanded hollow part) and the bottom surface of the running grooves 125a and 125b is a tapered face having a predetermined inclination angle θ. In this way, by defining the lateral surface 126c as a tapered face, the porous hollow fiber membrane M is suppressed from being caught at the edge formed by the lateral surface 126c of the main body-side concaved part 126b and the running grooves 125a and 125b during travel of the porous hollow fiber membrane M.

The inclination angle, i.e. angles θ1 and θ2 formed by the bottom surface of the expanded hollow part and the lateral surface connecting the bottom surface of the expanded hollow part and the bottom surface of the running groove, is preferably 90 to 175 degrees, more preferably 100 to 170 degrees, and even more preferably 120 to 150 degrees. If the inclination angle is within the above-mentioned range, the angle formed by the bottom surface of the running grooves 125a and 125b inside of the expanded hollow part and the lateral surface 126c will be an obtuse form; therefore, introducing the hollow fiber membrane to the running path is facilitated.

In the expanded hollow part, the inclination angle 81 on the upstream side and the inclination angle θ2 on the downstream side may be different, and because the porous hollow fiber membrane M inside of the expanded hollow part will be pressurized uniformly, the inclination angle θ1 on the upstream side and the inclination angle θ2 on the downstream side are preferably the same angle.

A separation distance h1 from the outer circumferential surface of the porous hollow fiber membrane M to the bottom surface of the lid-side concaved part 126a is preferably 1 to 10 times the diameter of the porous hollow fiber membrane M, and more preferably 3 to 7 times the diameter of the porous hollow fiber membrane M. Similarly, the separation distance h2 from the outer circumferential surface of the porous hollow fiber membrane M to the bottom surface of the main body-side concaved part 126b is also preferably 1 to 10 times the diameter of the porous hollow fiber membrane M, and more preferably 3 to 7 times the diameter of the porous hollow fiber membrane M.

By forming the lid-side concaved part 126a and main body-side concaved part 126b in this way, the cross section of the expanded hollow part 126 is formed larger than the cross section of the hollow fiber membrane running path 125. The cross section of the expanded hollow part 126 is preferably 10 to 140 times the cross section of the hollow fiber membrane running path 125, and more preferably 30 to 70 times.

In addition, by forming the expanded hollow part 126 in this way, it is possible to reduced the pressure substantially uniformly on the outer circumferential side of the porous hollow fiber membrane M overall inside of the expanded hollow part 126, and the cleaning liquid L can flow from the inner circumferential side of the porous hollow fiber membrane M to the outer circumferential side.

The length D of the overall running path totaling the hollow fiber membrane running path 125 and expanded hollow part 126 (refer to FIG. 2) is preferably 100 to 2000 mm, and more preferably 300 to 1000 mm. Thereamong, the length of the expanded hollow part 126 is preferably 10 to 50% of the length D of the overall running path, and more preferably 20 to 40% of the overall running path.

If the length D of the overall running path is at least the lower limit value, the suction amount of cleaning liquid L required to reduce pressure around the porous hollow fiber membrane M will be less. If the length D of the overall running path is no more than the upper limit value, it will tend to suppress the travel resistance of the porous hollow fiber membrane M and the device 11 for cleaning from increasing in size.

In the expanded hollow part 126, when defining the outside diameter of the hollow fiber membrane as d, the length X parallel to the hollow fiber membrane travel direction preferably satisfies 2d≤X≤200d, and the height W orthogonal to the hollow fiber membrane travel direction satisfies 1.5d≤W≤30d. A more preferable range of the length X is 2.5d≤X≤150d, and an even more preferable range is 3d≤X≤100d. A more preferable range of the height W is 1.8d≤W≤25d, and an even more preferable range is 2d≤W≤20d.

The length X and height W more preferably satisfy 2.5d≤X≤150d and satisfy 1.8d≤W≤25d, and even more preferably satisfy 3d≤X≤100d and satisfy 2d≤W≤20d.

The length X is the length of the expanded hollow part in the same direction as the travel direction of the hollow fiber membrane in the expanded hollow part. In other words, it is the length of the straight line connecting the point of contact p1 between the lateral surface 126c and the running groove 125a positioned on the upstream side of the expanded hollow part and the point of contact p2 between the lateral surface 126c and the running groove 125a positioned on the downstream side of the expanded hollow part.

The height W is the height of the expanded hollow part in an orthogonal direction relative to the travel direction of the hollow fiber membrane in the expanded hollow part, and is the height from the bottom surface of the lid-side concaved part 126a to the main body-side concaved part 126b in an orthogonal direction relative to the travel direction of the hollow fiber membrane in the expanded hollow part. In other words, it is the distance totaling the outside diameter d of the porous hollow fiber membrane M with the separation distance h1 from the outer circumferential surface of the porous hollow fiber membrane M to the bottom surface of the lid-side concaved part 126a, and the separation distance h2 from the outer circumferential surface of the porous hollow fiber membrane M to the bottom surface of the main body-side concaved part 126b.

When the length X is within the range, the pressure gradient due to pressure loss occurring due to the cleaning liquid flowing in the membrane travel direction can be decreased, the membrane throughput of cleaning liquid can be increased, and oscillation or bending of the membrane in the expanded hollow part can be suppressed.

When the height W is within the range, the pressure distribution in the circumferential direction of the hollow fiber membrane can be made uniform, and the manufacturing cost of the duct structure can be curbed.

### (Branched Duct)

The branched duct is a duct allowing cleaning liquid to flow through by pressure feeding or suctioning the cleaning liquid, and is a duct connected to the hollow fiber membrane running path or the expanded hollow part.

As shown in FIG. 4, the branched duct 122 is formed to penetrate from the bottom surface of the main body-side concaved part 126b formed in the main body 123a to outside.

In the first reduced-pressure cleaning part 120, the distance from the inlet 121a to the branched duct 122 and the distance from the outlet 121b to the branched duct 122 are formed to be the same. In addition, the structure of the duct from the inlet 121a to the branched duct 122 and the structure of the duct from the outlet 121b to the branched duct 122 are preferably symmetrical structures relative to the branched duct 122.

When making as such structures, the force drawing the porous hollow fiber membrane M inside of the hollow fiber membrane running path 125 (compressive force in central axial direction of membrane) is symmetrical interposing the branched duct 122, upon suctioning cleaning liquid L from the branched duct 122 by way of the liquid suction means 124. The cross-sectional shape of the branched duct 122 is not particularly limited, and may be circular or rectangular.

### (Lid)

The lid 123b is one among the at least two structures constituting the duct structure 123.

The lid 123b is formed to be removable relative to the main body 123a, and the lid 123b is fixed to the main body 123a during operation of the device 11 for cleaning.

As fixing means of the lid 123b to the main body 123a, it is preferable to fasten by a bolt, or use a threaded feed mechanism allowing the lid 123b to rise and lower to be removable relative to the main body 123a, or a fluid driving mechanism such as an oil-hydraulic cylinder, pneumatic cylinder or hydraulic cylinder.

By the lid 123b being made removable relative to the main body 123a in this way, it becomes possible to easily insert the porous hollow fiber membrane M inside of the running groove 125a and 125b while the lid 123b is removed. Therefore, the porous hollow fiber membrane M can be simply and efficiently arranged at a predetermined position inside of the hollow fiber membrane running path 125. In addition, even in a case of the porous hollow fiber membrane M clogging inside of the hollow fiber membrane running path 125 for any reason and the device 11 for cleaning stopping, inside of the hollow fiber membrane running path 125 is easily confirmed by removing the lid 123b from the main body 123a, and maintenance is easily performed.

As shown in FIG. 1, the liquid suction means 124 suctions cleaning liquid L inside of the hollow fiber membrane running path 125 through the branched duct 122, whereby the pressure of cleaning liquid L inside of the hollow fiber membrane running path 125 and expanded hollow part 126 is made to decline.

The liquid suction means 124 in this example has an ejector 124a that suctions cleaning liquid L, a pump 124b that pressure feeds the cleaning liquid L to the ejector 124a as working fluid, a first pipe 124c and a second pipe 124d, the ejector 124a being connected to the branched duct 122 and first cleaning tank 111 via the first pipe 124c, whereby it is configured so as to be able to suction cleaning liquid L from inside the expanded hollow part 126 through the branched duct 122 and first pipe 124c.

The suctioned cleaning liquid L comes to be returned to inside the first cleaning tank 111 through the first pipe 124c. However, the device 11 for cleaning of the present invention is not limited to this form, and may be a form in which the cleaning liquid L suctioned by the liquid suction means 124 is disposed of or transferred to a separate process.

The ejector 124a employs the kinetic energy of the cleaning liquid L pressure fed from the pump 124b, and suctions the cleaning liquid L inside of the expanded hollow part 126 through the branched duct 122. More specifically, the cleaning liquid L is pressurized by the pump 124b and sprayed at high speed from a nozzle (not illustrated), and using the kinetic energy of this cleaning liquid L, causes the cleaning liquid to be suctioned associatively.

Normally, in a case of suctioning liquid to a highly reduced pressure, vacuum bubbles or vapor bubbles due to flashing are generated inside of the pump duct or inside the impeller, and abnormal oscillations may occur in the pump, and damage of the impeller may occur due to cavitations.

The suction employing the ejector 124a is effective as a method of preventing such phenomena and pump damage.

The structure of the ejector 124a is extremely simple and does not have rotating parts like a pump, and even if oscillations occur from vacuum bubbles or vapor bubbles due to flashing generating inside, the ejector 124a will not be easily damaged. Additionally, even if suctioning foreign contamination, there is little concern over damaging or clogging.

In addition, in the case of the porous hollow fiber membrane M being cut inside of the first reduced-pressure cleaning part 120, for example, if an end thereof is suctioned up from the branched duct 122 along with cleaning liquid L, the end of the porous hollow fiber membrane M would wind around a rotating portion of the pump, whereby the pump may lock and stop, or the pump impeller or motor may be damaged.

In contrast, in the case of the ejector 124a, there is no part for the end of the porous hollow fiber membrane M to wind around, and with only being discharged from the outlet of the ejector 124a together with the cleaning liquid L pressure fed to the ejector 124a from the pump 124b, there is almost no concern over damaging the pump 124b.

As the pump 124b, it is preferably one that can suction cleaning liquid L from the first cleaning tank 111 to supply the suctioned cleaning liquid L to the ejector 124a, and can achieve the required degree of reduced pressure. For example, a single-stage or multi-stage centrifugal pump, cascade pump, scroll pump, gear pump or the like can be exemplified. In addition, a seal-less type pump in which the drive shaft of the pump and motor rotating shaft are connected by a magnet coupling, in which the pump rotating shaft is isolated from open air, is particularly preferable without concern over open air leaking in from the seal part to the cleaning liquid L in a highly-reduced pressure state and the pump efficiency declining from decompression swelling.

The liquid suction means 124 is preferably configured so as to be controllable by an inverter that is not illustrated.

In addition, it is more preferable to provide a pressure sensor that is not illustrated to a position desired to be kept at a fixed pressure, and to make so as to be able to automatically control the pump revolution speed of the pump 124b in the liquid suction means 124 or the like, by feeding back the output of the pressure sensor to the inverter.

The pressure range upon depressurizing by way of the reduced-pressure cleaning part is preferably at least -0.1 MPa to less than 0 MPa, more preferably at least -0.09 MPa to less than -0.03 MPa, and even more preferably at least -0.08 MPa to less than -0.04 MPa.

### (Pressurized Cleaning Part)

The pressurized cleaning part 130 shown in FIG. 1 pressurizes the cleaning liquid on the outer circumferential side of the porous hollow fiber membrane M immersed in the cleaning liquid L to cause the cleaning liquid to be supplied from the outer circumferential side of the porous hollow fiber membrane M to the inner circumferential side.

The pressurized cleaning part 130 has a duct structure 133 arranged in the cleaning liquid L and having an inside filled by cleaning liquid L, and a liquid injection means 134 that injects cleaning liquid L inside of the hollow fiber membrane running path 135 of the duct structure 133 to cause the pressure of cleaning liquid L inside of the hollow fiber membrane running path 135 to rise.

The liquid injection means 134 has a pump 134b that pressure feeds cleaning liquid L inside of the hollow fiber membrane running path 135, and a first pipe 134c having one end connected to the second cleaning tank 112, and another end connected to the branched duct 132 of the duct structure 133.

The branched duct 132 is connected to the pump 134b of the fluid injection means 134 via the first pipe 134c, and is configured so as to be able to inject cleaning liquid L inside of the hollow fiber membrane running path 135 through the branched duct 132 by the pump 134b. The pressure of cleaning liquid L inside of the hollow fiber membrane running path 135 can thereby be made to rise according to the flow pressure loss of cleaning liquid L inside of the hollow fiber membrane running path 135.

The pressurized cleaning part 130 is configured so as to allow the porous hollow fiber membrane M to travel continuously so as to pass through the inside of the hollow fiber membrane running path 135 while cleaning liquid L is filled and pressurized in this way.

The configuration of the duct structure 133 is the same as the duct structure 123 of the first reduced-pressure cleaning part 120. In other words, the top of the main body 123a at which the running grooves 125a and 125b forming the hollow fiber membrane running path 125, the main body-side concaved part 126b and branched duct 122 are formed is formed by closing with the lid 123b in which the lid-side concaved part 126a is formed, as in the duct structure 123 shown from FIG. 2 to FIG. 5.

In the case of using the duct structure 123 shown in FIG. 2 as the duct structure 133, when injecting cleaning liquid L in a state in which the lid 123b is made to tightly seal to the main body 123a, the inside of the hollow fiber membrane running path 125 enters a pressurized state, the force pushing up on the lid 123b acts and the lid 123b lifts up from the main body 123a, whereby a gap occurs and the cleaning liquid L in a pressurized state leaks and the pressure of the cleaning liquid L inside may decline. For this reason, it is preferable to impart to the lid 123b a closing force greater than the force pushing up the lid 123b at all times.

In granting a closing force to the lid 123b, it is preferable to fasten the lid 123b to the main body 123a by bolts or the like, or use a threaded feed mechanism or a fluid drive mechanism such as an oil-hydraulic cylinder, pneumatic cylinder or hydraulic cylinder that can both raise and lower the lid 123b and grant the closing force, as described previously.

In addition, the cross-sectional shape of the hollow fiber membrane running path 135, expanded hollow part 136 and branched duct 132 are the same as the duct structure 123 of the first reduced-pressure cleaning part 120.

Furthermore, the width and height of the hollow fiber membrane running path 135, length and area of the expanded hollow part 136, length of the entire running path D, etc. are the same as the duct structure 123 of the first reduced-pressure cleaning part 120.

In the pressurized cleaning part 130, the distance from the inlet 131a to the branched duct 132 and the distance from the outlet 131b to the branched duct 132 may be respectively equal, and the distance from the branched duct 132 to the outlet 131b may be set to be shorter than the distance from the branched duct 132 to the inlet 131a.

In particular, when making as a structure in which the distance from the branched duct 132 to the outlet 131b is shorter than the distance from the branched duct 132 to the inlet 131a, upon injecting the cleaning liquid L from the branched duct 132 by way of the liquid injection means 134, a force drawing the porous hollow fiber membrane M from inside the hollow fiber membrane running path 135 (tension in the membrane central axial direction) generates interposing the branched duct 132; however, this force becomes stronger on the outlet 131b side, and thus can be used as a driving force to cause the porous hollow fiber membrane M to move from the inlet 131a to the outlet 131b.

The liquid injection means 134 suctions the cleaning liquid L in the second cleaning tank 112, injects through the branched duct 132 to raise the pressure of the cleaning liquid L inside of the hollow fiber membrane running path 125 and/or inside the expanded hollow part 136.

The liquid injection means 134 in this example has a pump 134b that pressure feeds the cleaning liquid L inside of the hollow fiber membrane running path 135 and a first pipe 134c, the pump 134b being connected to the branched duct 132 and second cleaning tank 112 via the first pipe 134c, thereby configuring so as to be able to inject cleaning liquid L inside of the hollow fiber membrane running path 135 by passing through the branched duct 132 via the first pipe 134c.

As the liquid injection means 134, it is acceptable so long as one that injects the cleaning liquid L inside of the expanded hollow part 136 through the branched duct 132, has a discharge amount and a lifting height that can generate a predetermined pressure, and which is a material not corroded by the cleaning liquid L, or a wetted part coating is carried out. For example, a single-stage or multi-stage centrifugal pump, cascade pump, scroll pump, gear pump or the like can be exemplified. In addition, a seal-less type pump in which the drive shaft of the pump and motor rotating shaft are connected by a magnet coupling, in which the pump rotating shaft is isolated from open air, is particularly preferable without concern over open air leaking in from the seal part to the cleaning liquid L in a highly-reduced pressure state and the pump efficiency declining from decompression swelling.

The liquid injection means 134 is preferably configured so as to be able to be controlled by an inverter that is not illustrated.

In addition, it is more preferably provided with a pressure sensor that is not illustrated at a portion at which maintaining at a constant pressure is desired, and made so that automatic control is possible of the pump revolution speed of the pump 134b of the liquid injection means 134 or the like by feeding back the output of the pressure senor to the inverter.

The pressure range upon imparting pressure by way of the pressurized cleaning part is preferably at least 0.01 MPa to less than 1 MPa, more preferably at least 0.05 MPa to less than 0.5 MPa, and even more preferably at least 0.1 MPa to less than 0.3 MPa.

### (Second Reduced-Pressure Cleaning Part)

As shown in FIG. 1, the second reduced-pressure cleaning part 140 reduces the pressure of the cleaning liquid on the outer circumferential side of the porous hollow fiber membrane M immersed in the cleaning liquid, thereby causing the cleaning liquid L to pass from the inside of the porous hollow fiber membrane M to the outer circumferential side.

The second reduced-pressure cleaning part 140 has a duct structure 143 in which a hollow fiber membrane running path 145, an expanded hollow part 146, and a branched duct 142 branching from the expanded hollow part 146 are formed inside, and are arranged in the cleaning liquid L, the inside filled with the cleaning liquid L; and a liquid suction means 144 that suctions the cleaning liquid L inside of the expanded hollow part 146 of the duct structure 143, causing the pressure of the cleaning liquid L inside of the expanded hollow part 146 to decline.

The liquid suction means 144 has an ejector 144a that suctions the cleaning liquid L, a pump 144b that pressure feeds the cleaning liquid L to the ejector 144a as a working fluid, a first tube 144c having one end connected with the branched duct 142 of the duct structure 143 and another end connected to the third cleaning tank 113, and a second tube 144d having one end connected to the third cleaning tank 113 and another end connected to the ejector 144a.

The second reduced-pressure cleaning part 140 is the same configuration as the first reduced-pressure cleaning part 120, and thus explanation of the respective components will be omitted.

### (Supply Means)

The supply means 150 supplies clean cleaning liquid to the cleaning tank 110 (third cleaning tank in the present embodiment) arranged on the most downstream side. The supply means 150 includes a tank 151 that accommodates clean cleaning liquid and a supply pipe 152 that sends the clean cleaning liquid to the third cleaning tank 113.

### (Regulating Means)

The regulating means 160 regulates the travel of the porous hollow fiber membrane M.

The regulating means 60 of FIG. 1 is configured from guide rolls 161a to 161j. The porous hollow fiber membrane M is regulated in travel by these guide rolls 161a to 161j. More specifically, as shown in FIG. 1, the porous hollow fiber membrane M is drawn into the cleaning liquid L accommodated in the first cleaning tank 111 successively, introduced inside of the hollow fiber membrane running path 125 of the duct structure 123 from the inlet 121a of the first reduce-pressure cleaning part 120, and after passing through the cleaning liquid L inside of the hollow fiber membrane running path 125 and the inside of the expanded hollow part 126 and being discharged from the outlet 121b, is withdrawn outside of the cleaning liquid L. Next, the porous hollow fiber membrane M is drawn into the cleaning liquid L accommodated in the second cleaning tank 12, introduced inside of the hollow fiber membrane running path 135 of the duct structure 133 from the inlet 131a of the pressurized cleaning part 130, and after passing through the cleaning liquid L inside of the hollow fiber membrane running path 135 and the inside of the expanded hollow part 136 and being discharged from the outlet 131b, is withdrawn outside of the cleaning liquid L. Subsequently, it is drawn into the cleaning liquid L accommodated in the third cleaning tank 13, introduced inside of the hollow fiber membrane running path 145 of the duct structure 143 from the inlet 141a of the second reduced-pressure cleaning part 140, and after passing through the cleaning liquid L inside of the hollow fiber membrane running path 145 and the inside of the expanded hollow part 146 and comes to be discharged from the outlet 141b, is withdrawn outside of the cleaning liquid L.

As the guide rolls 161a to 161j in the regulating means 160, guide rolls that are normally used in the production of porous hollow fiber membrane M can be used.

An independent constant tension drive assist roll (not illustrated) may be installed to drive the guide roll 161j in every hollow fiber membrane running path on a downstream side in the travel direction of the hollow fiber membrane of the present device for cleaning. By installing the assist roll, it is possible to stabilize the tension of the hollow fiber membrane M inside of the hollow fiber membrane running path 125, whereby it is possible to avoid clogging inside of the running path due to bending or oscillation of the hollow fiber membrane.

In the present device for cleaning, packing may be installed at a surface of the main body 123a that contacts the lid 123b, which is a surface parallel to the running path 125 and positioned the most outwards of the duct structure 123a. By installing the packing, it is possible to prevent leakage, in a direction orthogonal to the travel direction, of the cleaning liquid flowing in the running path 125 during pressurized cleaning. By preventing leakage of the cleaning liquid, it is possible to prevent the phenomenon whereby a state is entered in which the porous hollow fiber membrane M traveling in the running path 125 sticks accompanying leakage of cleaning liquid at the cleaning liquid leaking part on the hollow fiber membrane running path 125 and cannot travel, and the running path clogging.

### (Operational Effect of First Embodiment)

According to the present embodiment, the hollow fiber membrane running path 125 is configured by the running grooves 125a and 125b formed in the main body 123a, and the lid 123b that is removable relative to the main body 123a; therefore, by removing the lid 123b, the top surface of the running grooves 125a and 125b is completely opened, and the porous hollow fiber membrane M can be simply and efficiently arranged at a predetermined position inside of the hollow fiber membrane running path 125. In addition, even in a case of the porous hollow fiber membrane M clogging inside of the hollow fiber membrane running path 125 for any reason and the device 11 for cleaning stopping during cleaning of the porous hollow fiber membrane M, the inside of the hollow fiber membrane running path 125 can be simply confirmed and easily maintained by removing the lid 123b from the main body 123a. Therefore, the efficiency of the device 11 for cleaning can be improved.

In addition, according to the present embodiment, by forming the cross-sectional shape of the hollow fiber membrane running path 125 formed by the running grooves 125a and 125b and the lid 123b in a triangular shape or substantially rectangular shape, the flow state of cleaning liquid L flowing around the porous hollow fiber membrane M inside of the hollow fiber membrane running path 125 enters an axi-symmetrical state relative to the central axis of the porous hollow fiber membrane M. Since the contact environment of the cleaning liquid L relative to the porous hollow fiber membrane M is thereby not biased in the circumferential direction of the porous hollow fiber membrane M, it is possible to stabilize the travel state of the porous hollow fiber membrane M inside of the hollow fiber membrane running path 125. Furthermore, it is preferable for at least one structure among the at least two separable structures constituting the duct structure to have at least one flat surface, and one surface constituting the hollow fiber membrane running path to share this flat surface. In other words, by forming one side among the at least two sides forming the triangular shape or rectangular shape by way of the lid 123b, it is possible to easily arrange the porous hollow fiber membrane M at a predetermined position in the running grooves 125a and 125b by removing the lid 123b. Since the porous hollow fiber membrane M can be simply and effectively arranged at a predetermined position inside of the hollow fiber membrane running path 25 in this way, the efficiency of the device 11 for cleaning can be improved.

### (Second Embodiment)

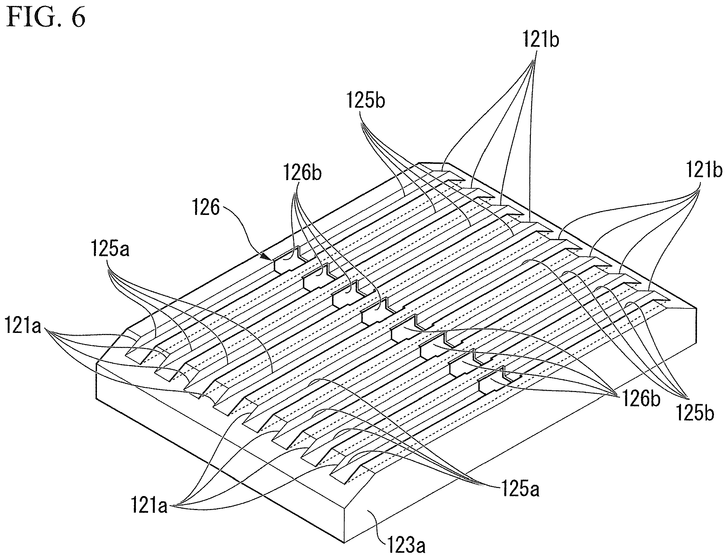

FIG. 6 is a perspective view of the main body 123a of the duct structure 123 of a second embodiment.

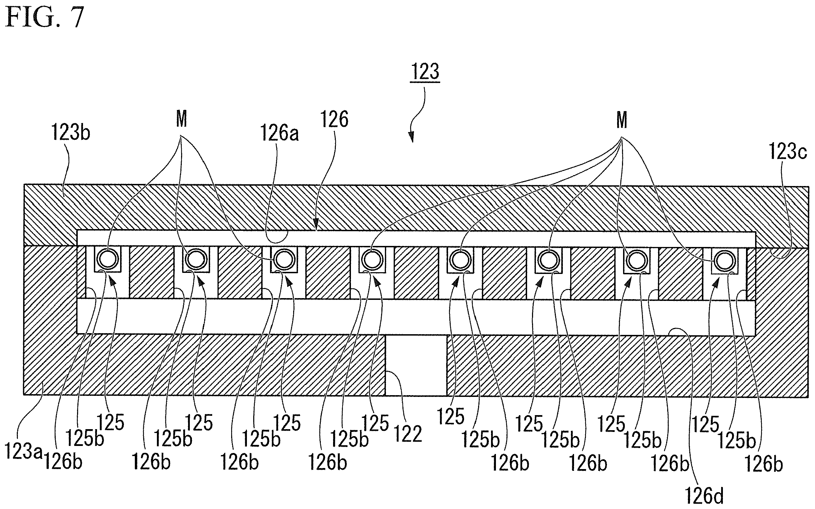

FIG. 7 is a cross-sectional view orthogonal to the travel direction of the duct structure 123 of the second embodiment viewed from an upstream side.

As shown in FIG. 3, in the aforementioned first embodiment, the main body-side concaved part 126b constituting the expanded hollow part 126 was formed so as to communicate with all eight of the running grooves 125a and 125b arranged in parallel. In contrast, the second embodiment differs from the first embodiment in the point of the main body-side concaved part 126b each being formed independently relative to the eight of the running grooves 125a and 125b arranged in parallel, as shown in FIG. 6. Hereinafter, the duct structure 123 of the second embodiment will be explained. Explanations will be omitted for configurations that are similar to the first embodiment.

As shown in FIG. 7, between the inlet 121a and outlet 121b of the eight formed hollow fiber membrane running path 125, eight of the main body-side concaved parts 126b are formed independently from each. Below each of the main body-side concaved parts 126b, a joining concaved part 126d that joins each of the main body-side concaved parts 126b is formed. In other words, each of the main body-side concaved parts 126b is formed as a penetrating hole to communicate between the top surface of the main body 123a and the joining concaved part 126d, and below, each of the main body-side concaved parts 126b is in communication via the joining concaved part 126d. The branched duct 122 is formed in the bottom of the joining concaved part 126d, and by cleaning liquid L being suctioned by the liquid suction means 124 through the branched duct 122, the pressure of the cleaning liquid L inside of the expanded hollow part 126 is made to decline.

### (Operational Effects of Second Embodiment)

According to the present embodiment, since at least two hollow fiber membrane running paths 125 are formed, and each of the expanded hollow parts 126 is formed separately between the inlet 121a and outlet 121b of the respective hollow fiber membrane running paths 125, at least two porous hollow fiber membranes M can be successfully cleaned at once. Therefore, the efficiency of the device 11 for cleaning can be further raised.

### (Device for Cleaning Porous Hollow Fiber Membranes of Third Embodiment)

The device for cleaning porous hollow fiber membranes of the third embodiment, which is one aspect of the present invention, includes: at least one cleaning tank in which cleaning liquid is accommodated, and the porous hollow fiber membrane sequentially passes; a pressurized cleaning part that pressurizes cleaning liquid on the outer circumferential side of the porous hollow fiber membrane immersed in the cleaning liquid to cause the cleaning liquid to pass from the inner circumferential side of the porous hollow fiber membrane to the outer circumferential side and/or a reduced-pressure cleaning part that reduces the pressure of the cleaning liquid on the outer circumferential side of the porous hollow fiber membrane immersed in the cleaning liquid to cause the cleaning liquid to pass from the inner circumferential side of the porous hollow fiber membrane to the outer circumferential side; a supply means for supplying the cleaning liquid to the cleaning tank; a duct structure having a hollow fiber membrane running path in which the porous hollow fiber membrane can continuously travel from an inlet at one end side towards an outlet at another end side provided inside the cleaning tank; and a hollow fiber membrane transfer means, in which the pressurized cleaning part has the duct structure arranged in the cleaning liquid and has an inside filled with cleaning liquid, and a liquid injection means for injecting cleaning liquid into the hollow fiber membrane running path of the duct structure to cause the pressure of the cleaning liquid inside of the hollow fiber membrane running path to rise, in which the reduced-pressure cleaning part has the duct structure arranged inside the cleaning liquid and has inside filled with cleaning liquid, and a liquid suction means for suctioning cleaning liquid inside of the hollow fiber membrane of the duct structure to cause the pressure of the cleaning liquid inside of the hollow fiber membrane running path to decline, in which the duct structure is composed of at least two structures that are separable, the duct structure having a running groove formed in at least one structure among the at least two structures, and a branched duct that pressure feeds or suctions the cleaning liquid to cause the cleaning liquid to circulate, the branched duct is a duct communicating with the running groove, and the hollow fiber membrane transfer means causes the porous hollow fiber membrane to insert and remove from inside of the running groove coupled with mounting and detaching of the at least two structures.

Hereinafter, the device for cleaning porous hollow fiber membranes of the third embodiment will be explained while referencing the drawings.

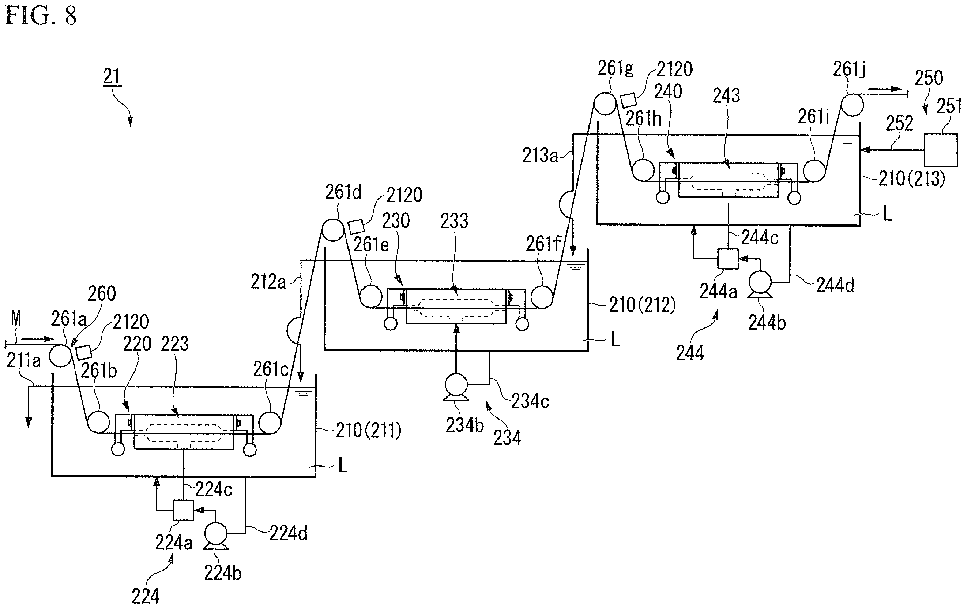

FIG. 8 is an illustrative diagram of a device 21 for cleaning a porous hollow fiber membrane of the present embodiment.

The third embodiment differs from the first and second embodiments in the point of having a hollow fiber membrane transfer means for causing the porous hollow fiber membrane to attach and detach from inside the running groove, and the point of performing abnormal part avoidance control S10. The device 21 for cleaning the porous hollow fiber membrane M of the third embodiment will be explained hereinafter. Explanations will be omitted for configurations that are similar to the first or second embodiment.

The device 21 for cleaning the porous hollow fiber membrane M shown in FIG. 8 is configured to include three cleaning tanks 210 (first cleaning tank 211, second cleaning tank 212 and third cleaning tank 213) through which the porous hollow fiber membrane M sequentially passes and in which cleaning liquid L is accommodated; a first reduced-pressure cleaning part 220, a pressurized cleaning part 230 and a second reduced-pressure cleaning part 240 that clean the porous hollow fiber membrane M; a supply means 250 that supplies clean cleaning liquid to the downstream side cleaning tank; and a regulating means 260 that regulates the travel of the porous hollow fiber membrane M.

In the device 21 for cleaning the porous hollow fiber membrane M, the first reduced-pressure cleaning part 220, pressurized cleaning part 230 and second reduced-pressure cleaning part 240 are arranged in series, and the first reduced-pressure cleaning part 220 and second reduced-pressure cleaning part 240 are positioned at both ends in this arrangement.

In addition, the first reduced-pressure cleaning part 220 is stored in the first cleaning tank 211 arranged the most to the upstream side, the pressurized cleaning part 230 is stored in the second cleaning tank 212 on a downstream side of the first cleaning tank 211, and the second reduced-pressure cleaning part 240 is stored in the third cleaning tank 213 on a downstream side of the second cleaning tank 212.

### (Cleaning Tank)

The cleaning tanks 210 accommodate the cleaning liquid L.

The materials, shapes, sizes and configurations of the cleaning tanks 210 are the same as the cleaning tanks of the first embodiment.

### (First Reduced-Pressure Cleaning Part)

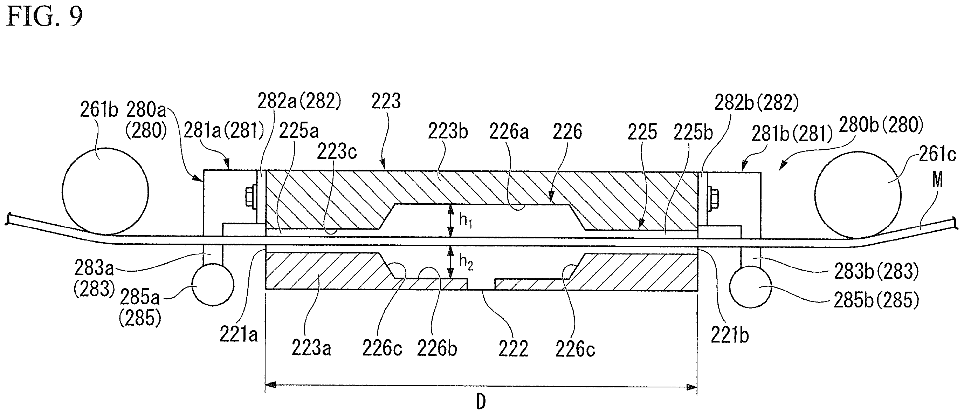

FIG. 9 is an illustrative diagram of the duct structure 223 of the third embodiment.

The first reduced-pressure cleaning part 220 reduces the pressure of the cleaning liquid on an outer circumferential side of the porous hollow fiber membrane M immersed in the cleaning liquid L, thereby causing the cleaning liquid L to pass from the inner circumferential side of the porous hollow fiber membrane M to the outer circumferential side.

The first reduced-pressure cleaning part 220 shown in FIG. 8 has a duct structure 223 in which a hollow fiber membrane running path 225 (refer to FIG. 9), an expanded hollow part 226 (refer to FIG. 9), and a branched duct 222 branching from the expanded hollow part 226 (refer to FIG. 9) are formed inside, and are arranged in the cleaning liquid L, the inside filled with the cleaning liquid L; and a liquid suction means 224 that suctions the cleaning liquid L inside of the expanded hollow part 226 of the duct structure 223, causing the pressure of the cleaning liquid L inside of the expanded hollow part 226 to decline.

The configuration of the duct structure 223 is the same as the duct structure 123 of the first embodiment.

### (Duct Structure)

As shown in FIG. 9, the duct structure 223 includes a main body 223a, lid 223b, and hollow fiber membrane transfer means 280 (280a, 280b) provided on the upstream side and downstream side of the lid 223b.

The materials of the main body 223a and lid 223b constituting the duct structure 223 are the same as the materials of the main body 123a and lid 123b of the first embodiment.

### (Hollow Fiber Membrane Running Path)

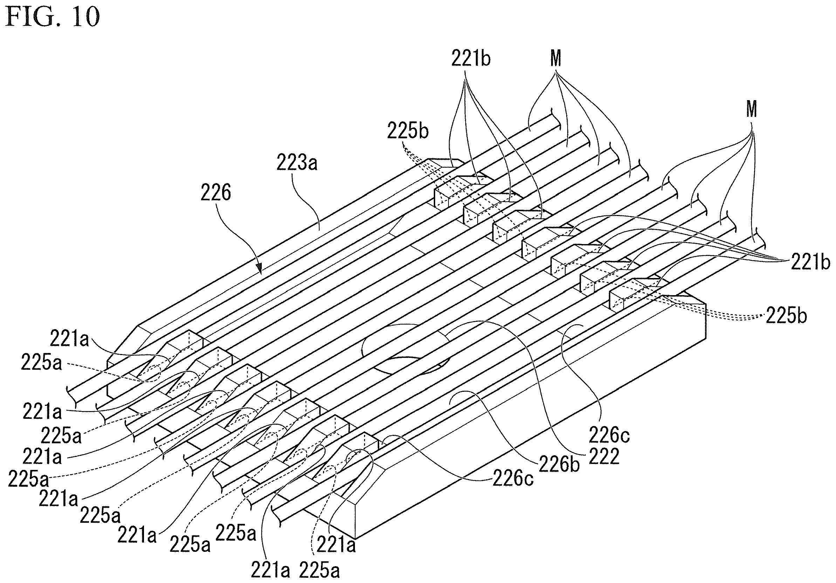

FIG. 10 is a perspective view of the main body 223a when the lid 223b of the duct structure 223 has been removed.

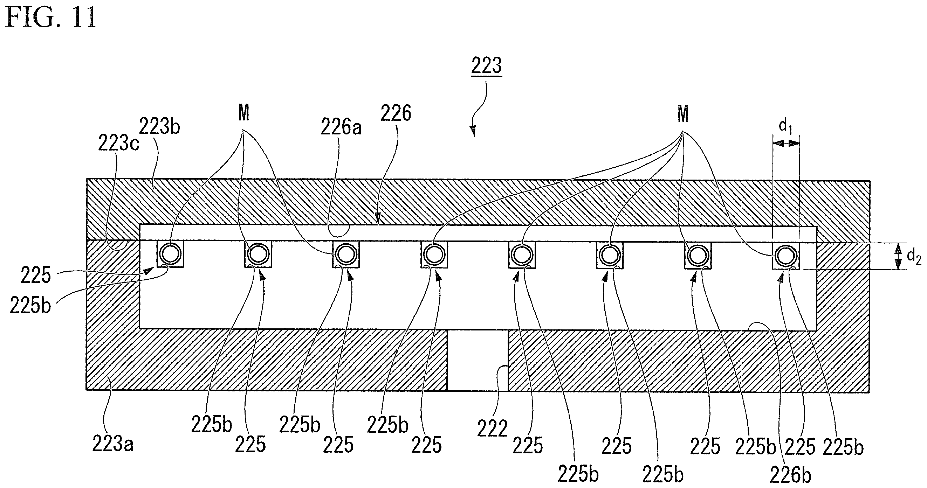

FIG. 11 is a cross-sectional view perpendicular to the travel direction of the duct structure 223 viewed from an upstream side.

As shown in FIG. 10, the running grooves 225a and 225b are formed in the top surface along the travel direction of the porous hollow fiber membrane M in the main body 223a. As shown in FIG. 11, the hollow fiber membrane running path 225 is formed by a bottom surface 223c of the lid 223b covering the running grooves 225a and 225b by tightly sealing the top surface of the main body 123a. Eight of the hollow fiber membrane running paths 225 of the present embodiment are formed in parallel in a direction orthogonal to the travel direction of the porous hollow fiber membrane M on a plane; however, the number of hollow fiber membrane running paths 225 is not limited to eight.

Since the hollow fiber membrane running path 225 is the same configuration as the hollow fiber membrane running path 125 of the first embodiment, explanations for each component will be omitted.

### (Expanded Hollow Part)

As shown in FIG. 9, the expanded hollow part 226 is formed between the inlet 221a and outlet 221b of the hollow fiber membrane running path 225. The configuration of the expanded hollow part 226 is the same as the expanded hollow part 126 of the first embodiment.

The separation distance h1 from the outer circumferential surface of the porous hollow fiber membrane M to the bottom surface of the lid-side concaved part 226a, the separation distance h2 from the outer circumferential surface of the porous hollow fiber membrane M to the bottom surface of the main body-side concaved part 226b, the cross section of the expanded hollow part 226, and the length D of the overall running path totaling the hollow fiber membrane running path 225 and expanded hollow part 226 are the same as the expanded hollow part 126 of the first embodiment.

### (Branched Duct)

As shown in FIG. 11, the branched duct 222 is formed to penetrate from the bottom surface of the main body-side concaved part 226b formed in the main body 223a to the outside. The configuration of the branched duct 222 is the same as the branched duct 122 of the first embodiment.

### (Lid)

The lid 223b is one of the at least two structures constituting the duct structure 223, and the structure transfer means is a means that causes the at least two structures to separate.

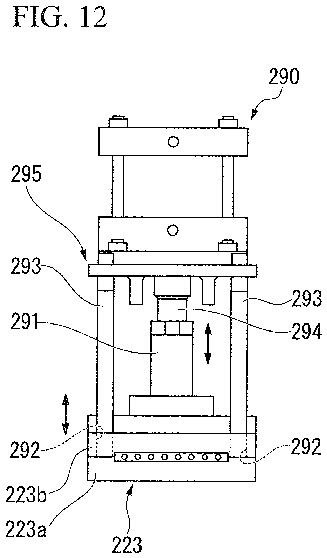

FIG. 12 is an illustrative diagram of the lid 223b and lid transfer means (structure transfer means) 290 of the third embodiment. FIG. 12 serves as an illustrative diagram when viewing the duct structure 223 and lid transfer means 290 from the travel direction.

As shown in FIG. 12, the lid 223b is configured so as to be mounted to the main body 223a by the lid 223b moving downwards by way of the lid transfer means 290 described later, and to be removed from the main body 223a by the lid 223b moving upwards. In other words, the lid 223b is formed to be removable relative to the main body 223a by way of raising and lowering movements.

The lid 223b is formed in a substantially rectangular shape in a plan view, and guide holes 292 through which guide rods 293 constituting the lid transfer means 290 are inserted are formed in the four corners of the lid 223b.

The lid 223b is positionally regulated in the horizontal direction by way of the guide holes 292 and guide rods 293, as well as being movable upwards and downwards along the guide rods 293. By being moved upwards or downwards so as to follow the guide rods 293 by way of the lid transfer means 290, the lid 223b is configured to be removable relative to the main body 223a.

By the lid 223b being made removable relative to the main body 223a in this way, it becomes possible to easily insert the porous hollow fiber membrane M inside of the running grooves 225a and 225b while the lid 223b is removed. Therefore, it is possible to simply and efficiently arrange the porous hollow fiber membrane M at a predetermined position inside of the hollow fiber membrane running path 225.

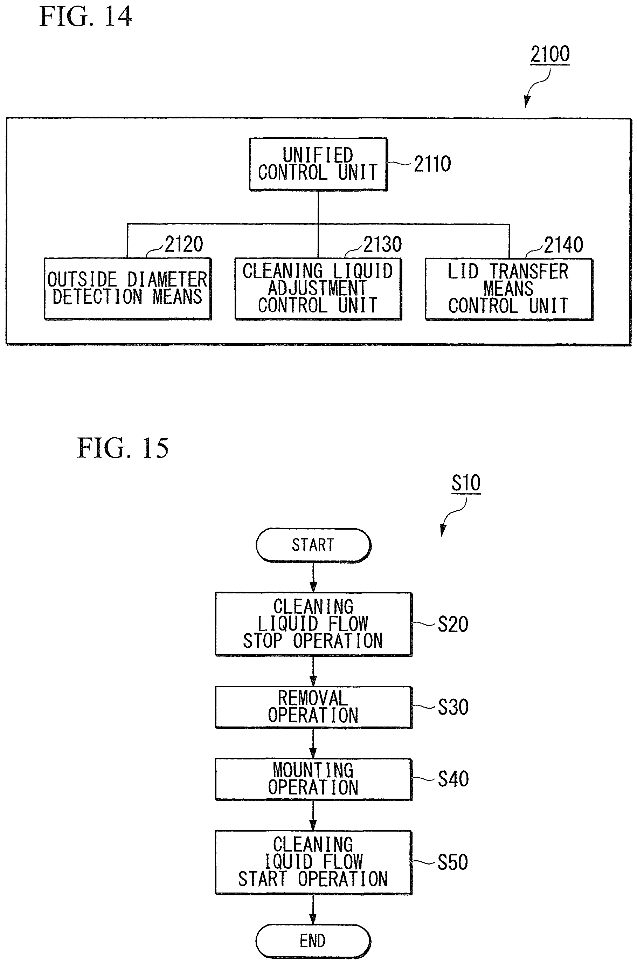

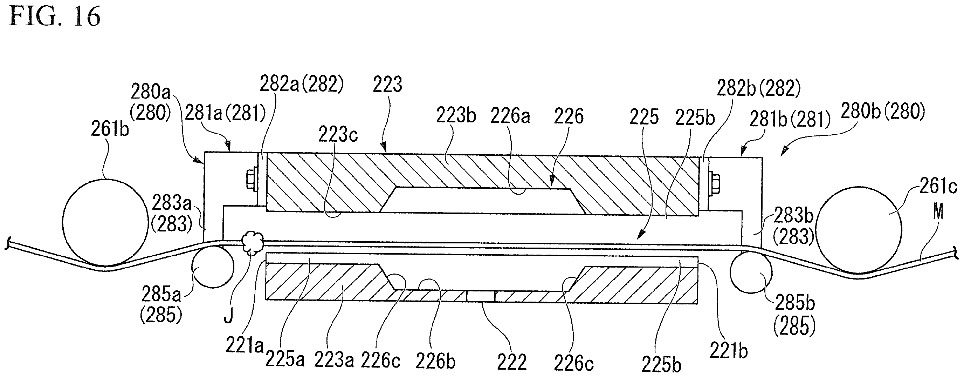

Furthermore, in the abnormal part avoidance control S10 described later (refer to FIG. 15), when an outer diameter abnormal part of the porous hollow fiber membrane M has been detected, the lid 223b is made to rise from the main body 223a to be removed, and the porous hollow fiber membrane M is raised and removed from the hollow fiber membrane running path 225. The porous hollow fiber membrane M having an abnormal part J (refer to FIG. 16) is thereby prevented from clogging inside of the hollow fiber membrane running path 225.

### (Lid Transfer Means)

The lid transfer means 290 of the present embodiment is a pneumatic cylinder 295 arranged above the lid 223b. The pneumatic cylinder 295 is configured by a piston 291 that is fixed to the top surface of the lid 223b and can move upwards and downwards, a cylinder tube 294 that causes the piston 291 to rise and lower, and the four guide rods 293 arranged vertically upwards from the four corners of the main body 223a.

The lid transfer means 290 causes the piston 291 to move upwards and downwards by supplying air into the cylinder tube 294 by way of an air source that is not illustrated.

The piston 291 is fixed to the top surface of the lid 223b, and the lid 223b is configured so as to move upwards and downwards by coupling with the upwards and downwards movements of the piston 291. As mentioned above, each of the guide rods 293 is inserted in the respective guide holes 292 of the lid 223b; therefore, the lid 223b moves upwards and downwards along the guide rods 293. The lid transfer means 290 of the lid 223b is not limited to a pneumatic cylinder, and may be an oil-hydraulic cylinder or hydraulic cylinder.

### (Hollow Fiber Membrane Transfer Means)

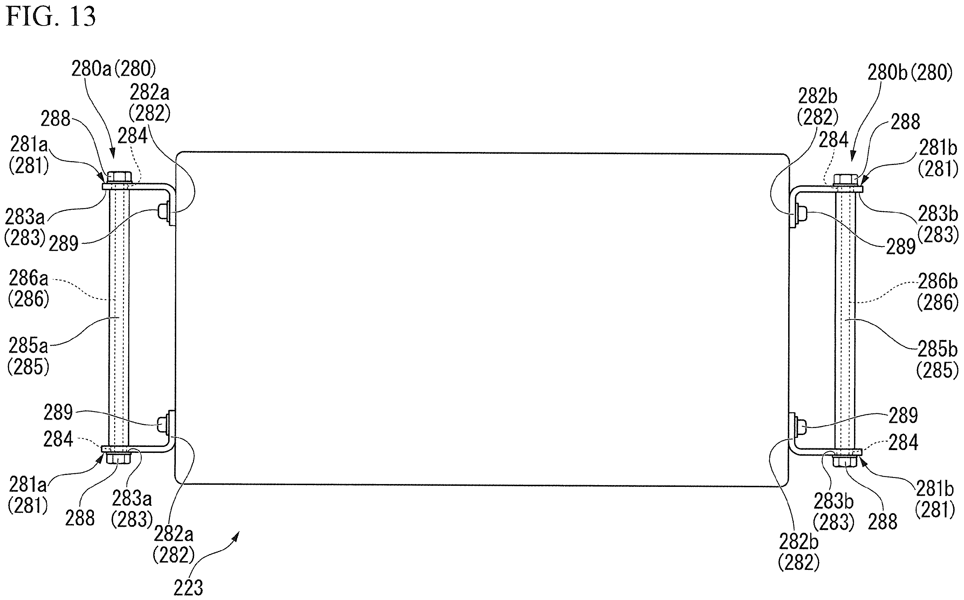

FIG. 13 is an illustrative diagram of the hollow fiber membrane transfer means 280 (280a, 280b). The upstream-side hollow fiber membrane transfer means 280a and the downstream-side hollow fiber membrane transfer means 280b are identical configurations. Therefore, in the following explanation, an explanation will be made only for the upstream-side hollow fiber membrane transfer means 280a, and an explanation of the downstream-side hollow fiber membrane transfer means 280b will be omitted.

The hollow fiber membrane transfer means 280a is a means that causes the porous hollow fiber membrane M to insert or remove from inside the running grooves 225a and 225b coupled with the mounting or detaching of the at least two structures constituting the duct structure 223.

The hollow fiber membrane transfer means 280a is mainly configured by a pair of brackets 281a fixed in a direction intersecting the travel direction at the upstream-side end face of the lid 223b and a rotating roller 285a that is pivotally supported to be rotatable between the pair of brackets 281a.

As shown in FIG. 13, the brackets 281a are formed in substantially L shapes in a plan view from metal such as iron and SUS, resin, or the like. One side of the bracket 281a serves as a pedestal 282a fixed to the upstream-side end face of the lid 223b, and the other side serves as a shaft support 283a that pivotally supports the rotating roller 285a. The bracket 281a is fixed to the upstream-side end face of the lid 223b by a bolt 289, for example; however, the fixing means is not limited to the bolt 289, and may be welded or the like, for example.

As shown in FIG. 9, the shaft support 283a of the bracket 281a is formed to extend more downwards than the bottom surface of the running grooves 225a and 225b formed in the main body 223a.

The extending length downwards of the shaft support 283a is set so that the outer circumferential surface of the rotating roller 285a arranged between the pair of shaft supports 283a is arranged below the porous hollow fiber membrane M, in a state in which the lid 223b is closely attached and mounted to the main body 223a. Furthermore, the extending length downwards of the shaft support 283a is set so that the separation distance between the rotating roller 285a and the porous hollow fiber membrane M is shorter than the upwards stroke length of the lid transfer means 290 described above. When the lid transfer means 290 thereby causes the lid 223b to rise, the rotating roller 285a contacts the porous hollow fiber membrane M and can make the porous hollow fiber membrane M move upwards.

As shown in FIG. 13, the rotating roller 285a is a cylindrical structure formed by metal, resin or the like, and is pivotally supported to be rotatable between the shaft supports 283a of the pair of brackets 281a. Movement in the axial direction of the rotating roller 285a is regulated by fastening a nut 288 to a shaft center 286 of the rotating roller 285a, for example.

In addition, between the shaft center 286 of the rotating roller 285a and the shaft support 283a of the bracket 281a, a bearing 284 is provided that reduces the sliding friction between the shaft center 286 of the rotating roller 285a and the bracket 281a, and prevents displacement of the shaft center 286 from the center of rotation.

In the present embodiment, it is preferable to use a bearing 284 made of resin consisting of polyether ether ketone (hereinafter referred to as "PEEK"). PEEK is one type of polyether ketone resin, and is a composite resin falling under crystalline thermoplastic resins. PEEK has an extremely high heat resisting property, and excels in anti-fatigability or abrasion resistance. Furthermore, the dimensional stability is also high, and excels in chemical resistance. In addition, contrary to a bearing made of metal, it is very light weight.

The material of the bearing 284 is not to be limited to PEEK, and may be another resin such as a phenol resin or polytetrafluoroethylene, for example. In addition, the material of the bearing 284 is not to be limited to a resin material, and may be a metal material such as SUS.

As shown in FIG. 8, the liquid suction means 224 suctions cleaning liquid L inside of the hollow fiber membrane running path 225 through the branched duct 222, whereby the pressure of cleaning liquid L inside of the hollow fiber membrane running path 225 and expanded hollow part 126 is made to decline.

The configurations of the liquid suction means 224, ejector 224a and pump 224b of the third embodiment are the same as the configurations of the liquid suction means 124, ejector 124a and pump 124b of the first embodiment.

The liquid suction means 224 of the third embodiment is controlled by a cleaning liquid adjustment control unit 2130 (refer to FIG. 14) in the abnormal part avoidance control S10 (refer to FIG. 15) described later, and in a case of an outside diameter detection means 2120 having detected an abnormal part of the porous hollow fiber membrane, stops the pump 224b and performs a cleaning liquid flow interruption operation S20. Details of the cleaning liquid flow interruption operation S20 will be described later.

### (Pressurized Cleaning Part)

The pressurized cleaning part 230 of the third embodiment shown in FIG. 8 pressurizes the cleaning liquid on the outer circumferential side of the porous hollow fiber membrane M immersed in the cleaning liquid L to cause the cleaning liquid L to be supplied from the outer circumferential side of the porous hollow fiber membrane M to the inner circumferential side.

The configurations of the pressurized cleaning part 230 and branched duct 232 are the same as the configurations of the pressurized cleaning part 130 and branched duct 132 of the first embodiment.

The configuration of the duct structure 233 is the same as the duct structure 223 of the first reduced-pressure cleaning part 220. In other words, the top of the main body 223a at which the running grooves 225a and 225b forming the hollow fiber membrane running path 225, the main body-side concaved part 226b and branched duct 222 are formed is formed by closing with the lid 223b in which the lid-side concaved part 226a is formed, as in the duct structure 223 shown from FIG. 9 to FIG. 11.

In the case of using the duct structure 223 shown in FIG. 9 as the duct structure 233, when injecting cleaning liquid L in a state in which the lid 223b is made to tightly seal to the main body 223a, the inside of the hollow fiber membrane running path 225 enters a pressurized state, the force pushing up on the lid 223b acts and the lid 223b lifts up from the main body 223a, whereby a gap occurs and the cleaning liquid L in a pressurized state leaks and the pressure of the cleaning liquid L inside may decline. For this reason, it is preferable to impart to the lid 223b a closing force greater than the force pushing up the lid 223b at all times.

In granting a closing force to the lid 223b, a fluid drive mechanism such as an oil-hydraulic cylinder, pneumatic cylinder or hydraulic cylinder described previously is used. The lid 223b is thereby configured to be able to rise and lower with automatic control, as well as the granting of closing force to the lid 223b becoming possible, whereby abnormal part avoidance control can also be performed at the pressurized cleaning part 230.

In addition, the cross-sectional shapes of the hollow fiber membrane running path 235, expanded hollow part 236 and branched duct 232 are the same as the duct structure 223 of the first reduced-pressure cleaning part 220.

Furthermore, the width and height of the hollow fiber membrane running path 235, length and area of the expanded hollow part 236, length of the overall running path D, or the like are the same as the duct structure 223 of the first reduced-pressure cleaning part 220.

The configurations of the inlet 231a and outlet 231b of the pressurized cleaning part 230 are the same as the inlet 131a and outlet 131b of the pressurized cleaning part 130 of the first embodiment.

The liquid injection means 234 suctions the cleaning liquid L in the second cleaning tank 212, and injects through the branched duct 232 to raise the pressure of the cleaning liquid L inside the expanded hollow part 236.

The configuration of the liquid injection means 234 of the third embodiment is the same as the liquid injection means 134 of the first embodiment.

The liquid injection means 234 of the third embodiment is configured so as to be controllable by an inverter that is not illustrated.

In addition, a pressure sensor that is not illustrated is provided to a position desired to be kept at a fixed pressure, and is configured so as to be able to automatically control the pump revolution speed of the pump 234b in the liquid injection means 234 or the like, by feeding back the output of the pressure sensor to the inverter.

Furthermore, the liquid injection means 234 is controlled by a cleaning liquid adjustment control unit 2130 (refer to FIG. 14) in the abnormal part avoidance control S10 (refer to FIG. 15) described later, and in a case of an outside diameter detection means 2120 having detected an abnormal part of the porous hollow fiber membrane, stops the pump 234b and performs the cleaning liquid flow interruption operation S20. Details of the cleaning liquid flow interruption operation S20 will be described later.

### (Second Reduced-Pressure Cleaning Part)

As shown in FIG. 8, the second reduced-pressure cleaning part 240 of the third embodiment reduces the pressure of the cleaning liquid on the outer circumferential side of the porous hollow fiber membrane M immersed in the cleaning liquid, thereby causing the cleaning liquid L to pass from the inside of the porous hollow fiber membrane M to the outer circumferential side. The configuration of the second reduced-pressure cleaning part 240 is the same as the reduced-pressure cleaning part 140 of the first embodiment.

### (Supply Means)

The configuration of the supply means 250 is the same as the supply means 150 of the first embodiment.

### (Regulating Means)

The regulating means 260 regulates travel of the porous hollow fiber membrane M.

The regulating means 260 of the third embodiment in FIG. 8 is configured from guide rolls 261a to 261j. The porous hollow fiber membrane M is regulated in travel by these guide rolls 261a to 261j. The configuration of the regulating means 260 of the third embodiment is the same as the regulating means 160 of the first embodiment.

In addition, during the abnormal part avoidance control S10 described later, the rotating roller 285 of the hollow fiber membrane transfer means 280 also functions as the regulating means 260. More specifically, when the lid 223b has risen according to the abnormal part avoidance control S10, on the upstream side and downstream side of the duct structures 223, 233 and 243, the rotating roller 285a abuts the porous hollow fiber membrane M causing the porous hollow fiber membrane M to move upwards and regulate the travel of the porous hollow fiber membrane M.

### (Abnormal part Avoidance Control Device)

FIG. 14 is a system block diagram of an abnormal part avoidance control device 2100.

The abnormal part avoidance control device 2100 performs the abnormal part avoidance control S10 to avoid the abnormal part J from traveling through the hollow fiber membrane running path 225, in the case of having determined that the outside diameter of the porous hollow fiber membrane M detected by the outside diameter detection means 2120 as being an abnormal part J, which is larger than a predetermined value.

The predetermined value of the outside diameter of the porous hollow fiber membrane M is a threshold of the outside diameter value, and is a value established from the width d1 of the hollow fiber membrane running path and the height d2 of the hollow fiber membrane running path.

The abnormal part avoidance control device 2100 is configured from the outside diameter detection means 2120 that detects the diameter of the porous hollow fiber membrane M, a cleaning liquid adjustment control unit 2130 that controls start and stop of pressure feeding or suction of cleaning liquid L (corresponding to "cleaning liquid adjustment means" of claim 11), a lid transfer means control unit 2140 that controls the structure transfer means, i.e. lid transfer means 290, and a unified control unit 2110 that detects an abnormal part from the signal of the outside diameter detection means 2120 and provides a signal to the cleaning liquid adjustment control unit 2130 and the lid transfer means control unit 2140.

### (Outside Diameter Detection Means)

The outside diameter detection means 2120 is a means that detects an abnormal part J on the outside diameter of the porous hollow fiber membrane M prior to the porous hollow fiber membrane M being introduced inside of the hollow fiber membrane running path 225.

The outside diameter detection means 2120 is arranged on an upstream side of the respective cleaning tanks 210 as shown in FIG. 8, and detects the diameter (outside diameter) of the porous hollow fiber membrane M.

The outside diameter detection means 2120 is an image reading device such as a CCD camera, for example, and detects the diameter (outside diameter) of the porous hollow fiber membrane M according to an image. The outside diameter detection means 2120 is not to be limited to an image reading device such as a CCD camera, and may be an optical outside-diameter measuring instrument or laser outside-diameter measuring instrument, for example.

### (Unified Control Unit)

The unified control unit 2110 determines whether the outside diameter of the porous hollow fiber membrane M detected by the outside diameter detection means 2120 is an abnormal part of larger diameter than a predetermined value. In addition, in the case of determining that the outside diameter of the porous hollow fiber membrane M is an abnormal part of greater diameter than the predetermined value, a start signal for abnormal part avoidance control S10 (hereinafter referred to as "control start signal") is provided to the cleaning liquid adjustment control unit 2130 and lid transfer means control unit 2140. Furthermore, after the abnormal part J of the porous hollow fiber membrane M has passed through the duct structures 223, 233 and 243, a stop signal for abnormal part avoidance control S10 (hereinafter referred to as "control start signal") is provided.

### (Cleaning Liquid Adjustment Control Unit)

The cleaning liquid adjustment control unit 2130 controls the stop or start of pressure feeding or suction of the cleaning liquid L based on the control start signal and control stop signal from the unified control unit 2110. The cleaning liquid adjustment control unit 2130 is connected with the pump 224b of the first reduced-pressure cleaning part 220, pump 234b of the pressurized cleaning part 230 and pump 244b of the second reduced-pressure cleaning part 240, and provides commands to the pumps 224b, 234b and 244b, respectively, to stop or drive based on the control start signal and control stop signal from the unified control unit 2110.

### (Lid Transfer Means Control Unit)

The lid transfer means control unit 2140 drives the lid transfer means 290 to cause the lid 223b to rise or lower based on the control start signal and control stop signal from the unified control unit 2110. More specifically, the lid transfer means control unit 2140 is connected to an air pump that is not illustrated of the lid transfer means 290. By driving the air pump to suction air inside of the cylinder tube 294 based on the control start signal from the unified control unit 2110, the piston 291 is made to rise, thereby causing the lid 223b to rise. In addition, by driving the air pump to pressure feed air inside of the cylinder tube 294 based on the control stop signal from the unified control unit 2110, the piston 291 is made to lower, thereby causing the lid 223b to lower.

### (Abnormal part Avoidance Control S10)

FIG. 15 is the control flow of abnormal part avoidance control S10.

In the case of the unified control unit 2110 having determined that there is an abnormal part in a traveling porous hollow fiber membrane M, the abnormal part avoidance control S10 is performed.

As shown in FIG. 15, the abnormal part avoidance control S10 is carried out by a cleaning liquid flow stop operation S20, removal operation S30, mounting operation S40, and cleaning liquid flow start operation S50. The respective operations will be explained hereinafter. The abnormal part avoidance control S10 is carried out at the respective cleaning parts of the first reduced-pressure cleaning part 220, pressurized cleaning part 230 and second reduced-pressure cleaning part 240; however, the control flows thereof are identical. Therefore, an explanation will be made hereinafter only for the abnormal part avoidance control S10 of the first reduced-pressure cleaning part 220, and explanations for the abnormal part avoidance control S10 of the pressurized cleaning part 230 and the second reduced-pressure cleaning part 240 will be omitted.

### (Cleaning Liquid Flow Stop Operation S20)

In the abnormal part avoidance control S10, the cleaning liquid flow stop operation S20 is carried out first.

In the cleaning liquid flow stop operation S20, a stop signal is provided to the pump 224b from the cleaning liquid adjustment control unit 2130. The suction of cleaning liquid L in the first reduced-pressure cleaning part 220 thereby stops.

### (Removal Operation S30)

FIG. 16 is an illustrative diagram of the removal operation S30. In order to facilitate understanding of the drawings, illustration of the lid transfer means 290 is omitted in FIG. 16.

In the abnormal part avoidance control S10, the removal operation S30 is carried out following the cleaning liquid flow stop operation S20.

In the removal operation S30, at least one structure of the at least two structures constituting the duct structure 223 is made to move to cause the at least two structure to separate.

In the removal operation S30, a signal so as to cause the piston 291 to rise is provided from the lid transfer means control unit 2140 to the lid transfer means 290. The lid 223b thereby rises coupled with the rise of the piston 291, and the lid 223b removes from the main body 223a as shown in FIG. 16. Furthermore, the rotating roller 285a of the hollow fiber membrane transfer means 280 rises coupled with the rise of the lid 223b. Then, the rotating roller 285a abuts the porous hollow fiber membrane M to cause the porous hollow fiber membrane M to move upwards. The porous hollow fiber membrane M is thereby removed from the running grooves 225a and 225b, and the abnormal part J of the porous hollow fiber membrane M openly travels between the main body 223a and lid 223b. Therefore, the abnormal part J passes without clogging inside of the hollow fiber membrane running path 225.

### (Mounting Operation S40)

In the abnormal part avoidance control S10, the mounting operation S40 is carried out following the removal operation S30.

In the mounting operation S40, when determined that the abnormal part J has passed through the duct structure 223 and moved to a downstream side of the duct structure 223, a signal so as to lower the piston 291 is provided from the lid transfer means control unit 2140 to the lid transfer means 290. The lid 223b and rotating roller 285a thereby lower coupled with the lowering of the piston 291, and the porous hollow fiber membrane M is arranged inside of the hollow fiber membrane running path 225, along with the lid 223b being mounted to the main body 223a, as shown in FIG. 9.

Whether or not the abnormal part J has moved to the downstream side of the duct structure 223 can be determined from the relationship between the traveling speed of the abnormal part J and the movement distance of the abnormal part J in the time from the moment when the abnormal part J passed through the outside diameter determination means 2120 until the moment when a certain arbitrary time has elapsed.

### (Cleaning Liquid Flow Start Operation S50)

In the abnormal part avoidance control S10, the cleaning liquid flow start operation S50 is carried out following the mounting operation S40.

In the cleaning liquid flow start operation S50, a drive signal is provided to the pump 224b from the cleaning liquid adjustment control unit 2130. Suction of the cleaning liquid L in the first reduced-pressure cleaning part 220 is thereby restarted, and cleaning of the porous hollow fiber membrane M is resumed.

Upon this, the abnormal part avoidance control S10 ends.

### (Operational Effects)

According to the present embodiment, the hollow fiber membrane running path 225 is configured by the running grooves 225a and 225b formed in the main body 223a, and the lid 223b that is removable relative to the main body 223a; therefore, the porous hollow fiber membrane M can be simply and effectively arranged at a predetermined position inside of the hollow fiber membrane running path 225 by removing the lid 223b. Therefore, it is possible to improve the operational efficiency of the device 21 for cleaning.

In addition, according to the present embodiment, since the hollow fiber membrane running path 225 can be opened by removing the lid 223b, it is possible to cause the lid 223b to be removed from the main body 223a, along with causing the porous hollow fiber membrane M to be removed from the running grooves 225a and 225b, when a porous hollow fiber membrane M defectively formed is trying to travel inside of the hollow fiber membrane running path 225, for example. Since it is thereby possible to avoid the defectively formed porous hollow fiber membrane M from traveling inside of the hollow fiber membrane running path 225, clogging of the porous hollow fiber membrane M can be prevented.

In addition, according to the present embodiment, when the defectively formed porous hollow fiber membrane M tries to travel inside of the hollow fiber membrane running path 225 during cleaning of the porous hollow fiber membrane M, the porous hollow fiber membrane M can be removed from inside of the running grooves 225a and 225b simultaneously with causing the lid 223b to remove from the main body 223a. It is thereby possible to avoid the defectively formed porous hollow fiber membrane M from traveling inside of the hollow fiber membrane running path 225. In addition, after avoiding the defectively formed porous hollow fiber membrane M from traveling inside of the hollow fiber membrane running path 225, the porous hollow fiber membrane M can be arranged inside of the running grooves 225a and 225b simultaneously with mounting the lid 223b to the main body 223a. It is thereby possible to simply and efficiently arrange the porous hollow fiber membrane M at a predetermined position inside of the hollow fiber membrane running path 225.

In addition, according to the present embodiment, due to having the outside diameter detection means 2120, it is possible to reliably detect a defectively formed porous hollow fiber membrane M. In addition, due to having the lid transfer means 290, when the defectively formed porous hollow fiber membrane M tries to travel inside of the hollow fiber membrane running path 25, it is possible to avoid the defectively formed porous hollow fiber membrane M from traveling inside of the hollow fiber membrane running path 225 by causing the porous hollow fiber membrane M to be removed from inside the running grooves 225a and 225b simultaneously with causing the lid 223b to remove from the main body 223a. In addition, due to having the cleaning liquid adjustment control unit 2130, it is possible to prevent a pressing force or suction force from acting on the lid 223b and porous hollow fiber membrane M by causing the pressure feeding or suction of the cleaning liquid L to stop during removal of the lid 223b. The lid 223b and porous hollow fiber membrane M can thereby be made to move easily. In addition, it is possible to suppress the pressing force or suction force from acting on the porous hollow fiber membrane M and the porous hollow fiber membrane M being damaged.

Moreover, according to the present embodiment, since it is possible to avoid an abnormal part J of a porous hollow fiber membrane M formed in a large diameter by performing the abnormal part avoidance control S10, clogging of the porous hollow fiber membrane M inside of the hollow fiber membrane running path 225 can be reliably prevented.

In addition, in the abnormal part avoidance control S10, since performing the removal operation S30 causing the lid 223b and porous hollow fiber membrane M to be removed is performed after the cleaning liquid flow stop operation S20 causing the pressure feeding or suction of the cleaning liquid L to stop, it is possible to suppress the pressing force or suction force from acting on the lid 223b and porous hollow fiber membrane M. It is thereby possible to allow the lid 223b and porous hollow fiber membrane M to easily move. In addition, it is possible to suppress the pressing force or suction force from acting on the porous hollow fiber membrane M and the porous hollow fiber membrane M being damaged.

### (Other Embodiments)

The technical scope of the present invention is not to be limited to the above-mentioned embodiments, and various modifications can be applied in a scope not departing from the gist of the present invention.

The device 1 for cleaning of the present invention is not limited to the device 11 or 21 for cleaning shown in FIG. 1 or 8. For example, in the device 11 or 21 for cleaning, the entirety of the duct structure 123, 133, 143, 223, 233 or 243 is immersed in the cleaning liquid L; however, so long as the inlet 121a, 131a, 141a, 221a, 231a or 241a and the outlet 121b, 131b, 141b, 221b, 231b or 241b of the hollow fiber membrane running path 125, 135, 145, 225, 235 or 245 are arranged in the cleaning liquid L and inside of each running path is filled with the cleaning liquid L, it is not limited to a configuration immersing the entirety of the duct structure 123, 133, 143, 223, 233 or 243 in the cleaning liquid L.

In the pressurized cleaning part 130 or 230, the inside of the hollow fiber membrane running path 135 or 235 and the inside of the expanded hollow part 136 or 236 are filled with the cleaning liquid L injected from the branched duct 132 or 232 by the liquid injection means 134 or 234, and the cleaning liquid L is discharged from the inlet 131a or 231a and outlet 131b or 231b by passing through the hollow fiber membrane running path 135 or 235.

In addition, the liquid suction means 124, 144, 224 or 244 of the first reduced-pressure cleaning part 120 or 220 and second reduced-pressure cleaning part 140 or 240 are not limited to a suction system using the ejector 124a, 144a, 224a or 244a, and may suction the cleaning liquid L inside of the hollow fiber membrane running path 125, 145, 225 and 245 through the branched duct 122, 142, 222 and 242 by a suction pump or the like, for example.

In addition, in the device 11 or 21 for cleaning shown in FIG. 1 or 8, the first reduced-pressure cleaning part 120 or 220, pressurized cleaning part 130 or 230 and second reduced-pressure cleaning part 140 or 240 are respectively stored in separate cleaning tanks 110 (first cleaning tank 111 to third cleaning tank 113) or 210 (first cleaning tank 211 to third cleaning tank 213); however, the first reduced-pressure cleaning part 120 or 220 and the pressurized cleaning part 130 or 230 may be stored in the same cleaning tank 110 or 210. The number of cleaning tanks 110 or 210 is a matter of design to be changed as appropriate in accordance with the technical application.

In the above embodiments, a device 11 or 21 for cleaning has been explained in which one of the pressurized cleaning part 130 or 230 is provided between the first reduced-pressure cleaning part 120 or 220 and the second reduced-pressure cleaning part 140 or 240; however, the present invention is not limited thereto, and two or more pressurized cleaning parts may be provided.

In the aforementioned device 11 or 21 for cleaning, the downstream-side cleaning tank is arranged so as to be at a higher position than the upstream-side cleaning tank; however, the respective cleaning tanks may be arranged horizontally so as to be at the same height.

In addition, the respective cleaning tanks are not limited to a horizontal arrangement, and may be a vertical arrangement.

Moreover, in the aforementioned embodiments, the number of cleaning tanks was three; however, the number of cleaning tanks is not limited to three. However, from the viewpoint of a reduction in size of the device 11 or 21 for cleaning, on the order of 2 to 3 is preferable.

The hollow fiber membrane transfer means 280 of the third embodiment is provided to be fixed at an end face of the lid 223b, and the hollow fiber membrane transfer means 280 is formed so as to move upwards or downwards coupled with the rising or lowering movement of the lid 223b by way of the lid transfer means 290. However, the hollow fiber membrane transfer means 280 may be provided independently without fixing to the lid 223b, and a raising and lowering means to cause the hollow fiber membrane transfer means 280 to rise or lower may be further provided independently. However, there is superiority in the present embodiment in the aspect of the device configuration being simple.

In addition, in the third embodiment, determination of whether or not an abnormal part J has moved to the downstream side of the duct structure 223 is done in the mounting operation S40 of the abnormal part avoidance control S10, based on the relationship between the travel speed of the abnormal part J and the movement distance when a predetermined time has elapsed. However, the outside diameter detection means 2120 may be provided on the downstream side of the duct structure 223, for example, and it may be determined that the abnormal part J has moved to the downstream side of the duct structure 223 based on detection data of the outside diameter detection means 2120 on the downstream side. However, there is superiority in the present embodiment in the aspect of being able to configure the device for cleaning at low cost without providing the outside diameter detection means 2120 on the downstream side of the duct structure 223.

In addition, in the third embodiment, the mounting operation S40 is automatically performed in the abnormal part avoidance control S10, after the abnormal part J has moved to the downstream of the duct structure 223. However, it is not required for the mounting operation S40 to necessarily be performed automatically, and it may be performed manually.

### INDUSTRIAL APPLICABILITY

The device for cleaning of the present embodiment can simply and efficiently arrange a porous hollow fiber membrane at a predetermined position inside of the hollow fiber membrane running path, and for which the inside of the hollow fiber membrane running path can be simply confirmed for easy maintenance. Therefore, since the operational efficiency of the device for cleaning can be improved, there is applicability in fields, etc. such as the food industry, medical care or the electronics industry.

### EXPLANATION OF REFERENCE NUMERALS

11, 21 device for cleaning
110, 210 cleaning tank
111, 211 first cleaning tank (cleaning tank)
112, 212 second cleaning tank (cleaning tank)
113, 213 third cleaning tank (cleaning tank)
121a, 131a, 141a, 221a, 231a, 241a inlet
121b, 131b, 141b, 221b, 231b, 241b outlet
122, 132, 142, 222, 232, 242 branched duct
123a, 133a, 143a, 223a, 233a, 243a main body
123b, 133b, 143b, 223b, 233b, 243b lid
123, 133, 143, 223, 233, 243 duct structure
125, 135, 145, 225, 235, 245 hollow fiber membrane running path
125a, 135a, 145a, 225a, 235a, 245a running groove
125b, 135b, 145b, 225b, 235b, 245b running groove
126, 136, 146 expanded hollow part
290 lid transfer means
2120 outside diameter detection means
2130 cleaning liquid adjustment control unit (cleaning liquid adjustment means)
L cleaning liquid
M porous hollow fiber membrane
J abnormal part
S10 abnormal part avoidance control
S20 cleaning liquid flow stop operation
S30 removal operation

## Claims

1. A device (11, 21) for cleaning a porous hollow fiber membrane (M) that allows the porous hollow fiber membrane to travel in a cleaning tank (110, 210) accommodating a cleaning liquid (L) and removes residue inside of the porous hollow fiber membrane, the device comprising:
a duct structure (123, 133, 143, 223, 233, 243) having at least two hollow fiber membrane running paths (125, 135, 145, 225, 235, 245) in a direction intersecting the travel direction, in which the porous hollow fiber membrane can travel continuously from an inlet at one end side towards an outlet at another end side inside of a cleaning tank, the at least two hollow fiber membrane running paths being formed in parallel, wherein
the duct structure comprises at least two structures that are separable,
the duct structure has at least two running grooves (125a, 135a, 145a, 225a, 235a, 245a; 125b, 135b, 145b, 225b, 235b, 245b) formed in at least one structure among the at least two structures and arranged in parallel, and a branched duct (122, 132, 142, 222, 232, 242) that pressure feeds or suctions the cleaning liquid to circulate the cleaning liquid,
wherein the hollow fiber membrane running paths are configured by the running grooves and the other structure of the at least two structures, and
the branched duct is a duct communicating with the hollow fiber membrane running path.

2. The device for cleaning according to claim 1, wherein the hollow fiber membrane running path comprises an expanded hollow part (126, 136, 146, 226, 236) in which a cross-sectional area of a cross section orthogonal to a hollow fiber membrane travel direction is formed to be greater than a cross-sectional area of a cross section orthogonal to the hollow fiber membrane travel direction of the running groove,
wherein the expanded hollow part is formed between the inlet at one end side of the hollow fiber membrane running path and the outlet at the other end side of the hollow fiber membrane running path, and
wherein the branched duct is a duct communicating with the expanded hollow part.

3. The device for cleaning according to claim 1 or 2, wherein either one structure among the at least two structures has at least one flat surface, and
wherein one surface constituting the hollow fiber membrane running path shares the flat surface.

4. The device for cleaning according to claim 3, wherein a cross-sectional shape of the hollow fiber membrane running path orthogonal to the travel direction is a triangular shape or rectangular shape.

5. The device for cleaning according to claim 4, wherein each of the at least two hollow fiber membrane running paths is a path having been formed independently so as to correspond to a hollow fiber membrane allowed to travel in the cleaning tank, and the respective expanded hollow part has been formed independently relative to said running path.

6. The device for cleaning according to any one of claims 2 to 5, wherein the expanded hollow part has a length X parallel to the hollow fiber membrane travel direction satisfying 2d ≤ X ≤ 200d, and
has a height W orthogonal to the hollow fiber membrane travel direction satisfying 1.5d ≤ W ≤ 30d,
wherein d is the outside diameter of the hollow fiber membrane.

7. The device for cleaning according to any one of claims 2 to 6, wherein an angle formed between a bottom surface of the expanded hollow part and a lateral surface connecting the bottom surface of the expanded hollow part and a bottom surface of the running groove is in the range of 90 degrees to 175 degrees.

8. The device for cleaning according to any one of claims 1 to 7, comprising a hollow fiber membrane transfer means (280, 280a, 280b) for causing the porous hollow fiber membrane to insert or remove from inside of the running groove coupled with mounting or detaching of the at least two structures.

9. The device for cleaning a porous hollow fiber membrane according to any one of claims 1 to 8, comprising:
an outside diameter detection means (2120) for detecting an abnormal part on the outside diameter of the porous hollow fiber membrane prior to the porous hollow fiber membrane being introduced inside of the hollow fiber membrane running path; and
a structure transfer means (290) for causing at least one structure among the at least two structures to move so as to separate the at least two structures.

10. The device for cleaning according to any one of claims 1 to 9, comprising an abnormal part avoidance control device (2100) that performs abnormal part avoidance control to avoid an abnormal part from traveling through the hollow fiber membrane running path, in a case of determining that the outside diameter of the porous hollow fiber membrane detected by way of the outside diameter detection means is a larger diameter than a predetermined value,
wherein the abnormal part avoidance control comprises:
a cleaning liquid flow adjustment operation of reducing or stopping pressure feed or suction of the cleaning liquid by way of the cleaning liquid adjustment means; and
a removal operation of separating the at least two structures by way of the structure transfer means of at least one structure among the at least two structures, together with removing the porous hollow fiber membrane from inside of the running groove by way of the hollow fiber membrane transport means, after the cleaning liquid flow adjustment operation.

11. The device for cleaning according to any one of claims 1 to 10, wherein one among the at least two structures is a main body (123a, 133a, 143a, 223a, 233a, 243a), and one is a lid (123b, 133b, 143b, 223b, 233b, 243b), and
wherein the lid is a structure that is disposed above the main body and is removable from the main body.

12. The device for cleaning according to claim 11, wherein the hollow fiber membrane running path is configured by the running groove, which is formed in the main body, and said lid, the top surface of the running groove being completely openable by removing the lid.

## Patentansprüche

1. Vorrichtung (11, 21) zum Reinigen einer porösen Hohlfasermembran (M), die es der porösen Hohlfasermembran ermöglicht, in einem Reinigungsbehälter (110, 210) entlangzulaufen, der eine Reinigungsflüssigkeit (L) aufnimmt und Rückstände innerhalb der porösen Hohlfasermembran entfernt, wobei die Vorrichtung umfasst:
eine Kanalstruktur (123, 133, 143, 223, 233, 243) mit mindestens zwei Hohlfasermembran-Laufpfaden (125, 135, 145, 225, 235, 245) in einer Richtung, die die Laufrichtung kreuzt, in der die poröse Hohlfasermembran kontinuierlich von einem Einlass an einer Stirnseite zu einem Auslass an einer anderen Stirnseite innerhalb eines Reinigungsbehälters entlanglaufen kann, wobei die mindestens zwei Hohlfasermembran-Laufpfade parallel zueinander ausgebildet sind, wobei
die Kanalstruktur mindestens zwei Strukturen umfasst, die trennbar sind,
die Kanalstruktur mindestens zwei Laufnuten (125a, 135a, 145a, 225a, 235a, 245a; 125b, 135b, 145b, 225b, 235b, 245b) aufweist, die in mindestens einer Struktur unter den mindestens zwei Strukturen ausgebildet und parallel angeordnet sind, und einen verzweigten Kanal (122, 132, 142, 222, 232, 242), der die Reinigungsflüssigkeit drückt oder saugt, um die Reinigungsflüssigkeit zu zirkulieren,
wobei die Hohlfasermembran-Laufpfade durch die Laufnuten und die andere Struktur der mindestens zwei Strukturen konfiguriert sind, und
wobei der verzweigte Kanal ein Kanal ist, der mit dem Hohlfasermembran-Laufpfad in Verbindung steht.

2. Vorrichtung zum Reinigen nach Anspruch 1, wobei der Hohlfasermembran-Laufpfad ein expandiertes Hohlteil (126, 136, 146, 226, 236) umfasst, in dem eine Querschnittsfläche eines Querschnitts orthogonal zu einer Hohlfasermembran-Laufrichtung ausgebildet ist, größer zu sein als eine Querschnittsfläche eines Querschnitts, der orthogonal zur Hohlfasermembran-Laufrichtung der Laufnut ist,
wobei das expandierte Hohlteil zwischen dem Einlass an einer Stirnseite der Hohlfasermembranlaufbahn und dem Auslass an der anderen Stirnseite der Hohlfasermembranlaufbahn ausgebildet ist, und
wobei der verzweigte Kanal ein Kanal ist, der mit dem expandierten Hohlteil in Verbindung steht.

3. Vorrichtung zur Reinigung nach Anspruch 1 oder 2, wobei entweder eine Struktur unter den mindestens zwei Strukturen mindestens eine ebene Oberfläche hat, und
wobei eine den Hohlfasermembran-Laufpfad bildende Oberfläche die flache Oberfläche teilt.

4. Vorrichtung zum Reinigen nach Anspruch 3, wobei eine Querschnittsform des Hohlfasermembran-Laufpfads orthogonal zur Verlaufrichtung eine dreieckige Form oder rechteckige Form ist.

5. Vorrichtung zum Reinigen nach Anspruch 4, wobei jede der mindestens zwei Hohlfasermembran-Laufpfade ein Pfad ist, der derart unabhängig ausgebildet wurde, dass er einer Hohlfasermembran entspricht, der es möglich ist, in den Reinigungstank zu laufen, und wobei das entsprechende expandierte Hohlteil relativ zu diesem Laufpfad unabhängig ausgebildet wurde.

6. Vorrichtung zum Reinigen nach einem der Ansprüche 2 bis 5, wobei das expandierte Hohlteil eine Länge X parallel zur Hohlfasermembranlaufrichtung hat, die 2d ≤ X ≤ 200d erfüllt, und
eine Höhe W orthogonal zu der Hohlfasermembranlaufrichtung aufweist, die 1,5d ≤ W ≤ 30d erfüllt,
wobei d der Außendurchmesser der Hohlfasermembran ist.

7. Vorrichtung zum Reinigen nach einem der Ansprüche 2 bis 6, wobei ein Winkel, der zwischen einer Bodenfläche des expandierten Hohlteils und einer lateralen Oberfläche ausgebildet ist, die die Bodenfläche des expandierten Hohlteils und eine Bodenfläche der Laufnut verbindet, in dem Bereich von 90 Grad bis 175 Grad liegt.

8. Vorrichtung zum Reinigen nach einem der Ansprüche 1 bis 7, umfassend eine Hohlfasermembran-Übertragungseinrichtung (280, 280a, 280b), um zu bewirken, dass die poröse Hohlfasermembran aus dem Inneren der Laufnut eingefügt oder entfernt wird, die mit dem Montieren oder Ablösen der mindestens zwei Strukturen verbunden ist.

9. Vorrichtung zum Reinigen einer porösen Hohlfasermembran nach einem der Ansprüche 1 bis 8, umfassend:
eine Außendurchmesser-Erfassungseinrichtung (2120) zum Erfassen eines anormalen Teils an dem Außendurchmesser der porösen Hohlfasermembran, bevor die poröse Hohlfasermembran ins Innere des Hohlfasermembran-Laufpfads eingeführt wird; und
eine Strukturübertragungseinrichtung (290), um zu bewirken, dass mindestens eine Struktur unter den mindestens zwei Strukturen sich so bewegt, dass die mindestens zwei Strukturen getrennt werden.

10. Vorrichtung zum Reinigen nach einem der Ansprüche 1 bis 9, umfassend eine Anormalteil-Vermeidungssteuervorrichtung (2100), die eine anormale Teilvermeidungssteuerung durchführt, um zu vermeiden, dass ein anormaler Teil durch den Hohlfasermembran-Laufpfad läuft, in einem Fall, in dem festgestellt wird, dass der Außendurchmesser der porösen Hohlfasermembran, der über die Außendurchmesser-Erfassungseinrichtung detektiert wird, ein größerer Durchmesser als ein vorbestimmter Wert ist,
wobei die Anormalteil-Vermeidungssteuervorrichtung umfasst:
einen Reinigungsflüssigkeitsströmungs-Einstellvorgang zum Reduzieren oder Stoppen der Druckzuführung oder Absaugen der Reinigungsflüssigkeit mittels der Reinigungsflüssigkeits-Einstellungseinrichtung; und
einen Entfernungsvorgang zum Trennen der mindestens zwei Strukturen über die Strukturübertragungseinrichtung von mindestens einer Struktur unter den mindestens zwei Strukturen, zusammen mit dem Entfernen der porösen Hohlfasermembran aus dem Inneren der Laufnut mittels der Hohlfasermembran-Transporteinrichtung nach dem Reinigungsflüssigkeitsstrom-Einstellvorgang.

11. Vorrichtung zum Reinigen nach einem der Ansprüche 1 bis 10, wobei eine der mindestens zwei Strukturen ein Hauptkörper (123a, 133a, 143a, 223a, 233a, 243a) ist, und einer ein Deckel (123b, 133b, 143b, 223b, 233b, 243b) ist, und
wobei der Deckel eine Struktur ist, die oberhalb des Hauptkörpers angeordnet ist und von dem Hauptkörper entfernbar ist.

12. Vorrichtung zum Reinigen nach Anspruch 11, wobei der Hohlfasermembran-Laufpfad durch die Laufnut konfiguriert ist, die in dem Hauptkörper ausgebildet ist, und wobei der Deckel, die Deckfläche der Laufnut, vollständig durch Entfernen des Deckels öffenbar ist.

## Revendications

1. Dispositif (11, 21) de nettoyage d'une membrane poreuse à fibre creuse (M) qui permet à la membrane poreuse à fibre creuse de se déplacer dans un réservoir de nettoyage (110, 210) contenant un liquide de nettoyage (L) et retire des résidus à l'intérieur de la membrane poreuse à fibre creuse, le dispositif comprenant :
une structure formant conduit (123, 133, 143, 223, 233, 243) ayant au moins deux chemins de passage de membrane à fibre creuse (125, 135, 145, 225, 235, 245) dans une direction croisant la direction de déplacement, dans laquelle la membrane poreuse à fibre creuse peut se déplacer de façon continue d'une entrée au niveau d'un côté d'extrémité vers une sortie au niveau d'un autre côté d'extrémité à l'intérieur d'un réservoir de nettoyage, les au moins deux chemins de passage de membrane à fibre creuse étant formés en parallèle, dans lequel
la structure formant conduit comprend au moins deux structures qui sont séparables,
la structure formant conduit a au moins deux rainures de passage (125a, 135a, 145a, 225a, 235a, 245a ; 125b, 135b, 145b, 225b, 235b, 245b) formées dans au moins une structure parmi les au moins deux structures et disposées en parallèle, et un conduit ramifié (122, 132, 142, 222, 232, 242) qui alimente en pression ou aspire le liquide de nettoyage pour faire circuler le liquide de nettoyage,
dans lequel les chemins de passage de membrane à fibre creuse sont configurés par les rainures de passage et l'autre structure des au moins deux structures, et
le conduit ramifié est un conduit communiquant avec le chemin de passage de membrane à fibre creuse.

2. Dispositif de nettoyage selon la revendication 1, dans lequel le chemin de passage de membrane à fibre creuse comprend une partie creuse expansée (126, 136, 146, 226, 236) dans laquelle une aire de section transversale d'une section transversale orthogonale à une direction de déplacement de membrane à fibre creuse est formée pour être supérieure à une aire de section transversale d'une section transversale orthogonale à la direction de déplacement de membrane à fibre creuse de la rainure de passage,
dans lequel la partie creuse expansée est formée entre l'entrée au niveau d'un côté d'extrémité du chemin de passage de membrane à fibre creuse et la sortie au niveau de l'autre côté d'extrémité du chemin de passage de membrane à fibre creuse, et
dans lequel le conduit ramifié est un conduit communiquant avec la partie creuse expansée.

3. Dispositif de nettoyage selon la revendication 1 ou 2, dans lequel l'une ou l'autre structure parmi les au moins deux structures possède au moins une surface plane, et
dans lequel une surface constituant le chemin de passage de membrane à fibre creuse partage la surface plane.

4. Dispositif de nettoyage selon la revendication 3, dans lequel une forme de section transversale du chemin de passage de membrane à fibre creuse orthogonale à la direction de déplacement est une forme triangulaire ou une forme rectangulaire.

5. Dispositif de nettoyage selon la revendication 4, dans lequel chacun des au moins deux chemins de passage de membrane à fibre creuse est un chemin ayant été formé indépendamment de sorte à correspondre à une membrane à fibre creuse autorisée à se déplacer dans le réservoir de nettoyage, et la partie creuse expansée respective a été formée indépendamment par rapport audit chemin de passage.

6. Dispositif de nettoyage selon l'une quelconque des revendications 2 à 5, dans lequel la partie creuse expansée a une longueur X parallèle à la direction de déplacement de membrane à fibre creuse répondant à la formule 2d ≤ X ≤ 200d, et
a une hauteur W orthogonale à la direction de déplacement de membrane à fibre creuse répondant à la formule 1,5d ≤ W ≤ 30d,
d étant le diamètre extérieur de la membrane à fibre creuse.

7. Dispositif de nettoyage selon l'une quelconque des revendications 2 à 6, dans lequel un angle formé entre une surface inférieure de la partie creuse expansée et une surface latérale raccordant la surface inférieure de la partie creuse expansée et une surface inférieure de la rainure de passage se situe dans la plage de 90 degrés à 175 degrés.

8. Dispositif de nettoyage selon l'une quelconque des revendications 1 à 7, comprenant un moyen de transfert de membrane à fibre creuse (280, 280a, 280b) pour faire en sorte que la membrane poreuse à fibre creuse s'insère ou se retire de l'intérieur de la rainure de passage en association avec le montage ou le démontage des au moins deux structures.

9. Dispositif de nettoyage d'une membrane poreuse à fibre creuse selon l'une quelconque des revendications 1 à 8, comprenant :
un moyen de détection de diamètre extérieur (2120) pour détecter une partie anormale sur le diamètre extérieur de la membrane poreuse à fibre creuse avant que la membrane poreuse à fibre creuse soit introduite à l'intérieur du chemin de passage de membrane à fibre creuse ; et
un moyen de transfert de structure (290) pour faire en sorte qu'au moins une structure parmi les au moins deux structures se mette en mouvement de sorte à séparer les au moins deux structures.

10. Dispositif de nettoyage selon l'une quelconque des revendications 1 à 9, comprenant un dispositif de commande servant à éviter une partie anormale (2100) qui exécute la commande servant à éviter une partie anormale afin d'éviter à une partie anormale de se déplacer à travers le chemin de passage de membrane à fibre creuse, dans le cas où il est déterminé que le diamètre extérieur de la membrane poreuse à fibre creuse détecté par le biais du moyen de détection de diamètre extérieur présente un diamètre plus important qu'une valeur prédéterminée,
dans lequel la commande servant à éviter une partie anormale comprend :
une opération d'ajustement de flux de liquide de nettoyage pour réduire ou interrompre l'alimentation en pression ou l'aspiration du liquide de nettoyage par le biais du moyen d'ajustement de liquide de nettoyage ; et
une opération de retrait pour séparer les au moins deux structures par le biais du moyen de transfert de structure d'au moins une structure parmi les au moins deux structures, ainsi que pour retirer la membrane poreuse à fibre creuse de l'intérieur de la rainure de passage par le biais du moyen de transport de membrane à fibre creuse, après l'opération d'ajustement de flux de liquide de nettoyage.

11. Dispositif de nettoyage selon l'une quelconque des revendications 1 à 10, dans lequel une parmi les au moins deux structures est un corps principal (123a, 133a, 143a, 223a, 233a, 243a), et une est un couvercle (123b, 133b, 143b, 223b, 233b, 243b), et
dans lequel le couvercle est une structure qui est disposée au-dessus du corps principal et peut être retirée du corps principal.

12. Dispositif de nettoyage selon la revendication 11, dans lequel le chemin de passage de membrane à fibre creuse est configuré par la rainure de passage, qui est formée dans le corps principal, et ledit couvercle, la surface supérieure de la rainure de passage pouvant s'ouvrir complètement en retirant le couvercle.
